# EUROPEAN PATENT APPLICATION

(11) **EP 4 825 915 A1**
(43) Date of publication of application: **21.10.2026**
(21) Application number: 25833500.9
(22) Date of filing: 01.07.2025
(51) Int. Cl.: C08L 23/0807, C08F 210/16, C08F 4/659, C08F 4/6592, C08J 5/18

(54) **POLYETHYLENE COMPOSITION AND STRETCHED FILM COMPRISING SAME**

(30) Priority: 01.07.2024 KR 20240086287
(71) Applicant: LG Chem, Ltd., Seoul 07336 (KR)
(72) Inventor: LEE, Hyunsup, Daejeon 34122 (KR); SONG, Christine Jisoo, Daejeon 34122 (KR); JEONG, Hyun Mook, Daejeon 34122 (KR); CHOI, Yi Young, Daejeon 34122 (KR); JUNG, Jin, Daejeon 34122 (KR)
(74) Representative: Hoffmann Eitle
(86) International application number: PCT/KR2025/009312
(87) International publication number: WO 2026/010314

(57) **Abstract**

Provided are a polyethylene composition and a stretched film comprising the same, which is capable of producing a stretched film having high shrinking resistance, uniform thickness deviation, and outstanding printability and transparency, based on its excellent mechanical properties, stretching stability, and favorable film processability and productivity.

## Description

### [TECHNICAL FIELD]

### CROSS-REFERENCE TO RELATED APPLICATION(S)

This application claims the benefit of Korean Patent Application Nos. 10-2024-0086287 and 10-2025-0087740, filed on July 1, 2024 and July 1, 2025 with the Korean Intellectual Property Office, respectively, the disclosures of which are incorporated herein by reference in their entirety.

The present disclosure relates to a polyethylene composition, which has excellent mechanical properties and stretching stability, along with outstanding film processability and productivity, suitable for producing a stretched film exhibiting high shrinking resistance, thickness uniformity, excellent printability, and transparency, and a stretched film including the same.

### [BACKGROUND]

Thin film products manufactured from linear low density polyethylene (LLDPE) and/or high density polyethylene (HDPE) are widely used in packaging applications such as merchandise bags, grocery bags, food and specialty packaging, and industrial liners. In these applications, packaging films capable of packaging products while maintaining their shape are primarily used, thereby functioning to protect the products from being touched during display.

In particular, among such packaging films, biaxially oriented polymer films are widely used for packaging purposes due to their excellent mechanical properties, productivity, and printability. Commercially available packaging films generally utilize biaxially oriented polypropylene (BOPP), biaxially oriented polyethylene terephthalate (BOPET), or biaxially oriented polyamide (BOPA) for a printing layer, and an LLDPE film for a sealing layer. Such composite material forms are not recyclable, and the demand for single-materials (mono-materials) is increasing due to the expansion of packaging material recycling regulations. Therefore, research and development are being conducted to manufacture a single-material packaging film by replacing the film of the printing layer with a biaxially oriented polyethylene (BOPE) film.

However, commercial polyethylene (PE) resins do not have sufficient stretching stability, and phenomena such as breakage or melting occur during stretching, making it difficult to apply them to a biaxial stretching process. To secure stretching stability, products in the form of a polyethylene composition containing a resin having a low density and a high melt index have been developed. However, such compositions exhibit low stiffness, shrinking resistance, and impact resistance, and are thus unsuitable as a PE resin for uniaxially or biaxially stretched films.

Therefore, there is a demand for a method of providing a PE composition for uniaxial or biaxial stretching that selects a polyethylene resin having a molecular structure favorable for stretching and an appropriate configuration, thereby exhibiting excellent stretching stability and outstanding mechanical properties during biaxial stretching, while also showing satisfactory film processability and productivity.

### [DETAILED DESCRIPTION OF THE INVENTION]

### [Technical Problem]

There are provided a polyethylene composition, which has excellent mechanical properties and stretching stability, along with outstanding film processability and productivity, suitable for producing a stretched film having high shrinking resistance, printability, and transparency, and a stretched film including the same.

### [Technical Solution]

According to one embodiment of the present disclosure, there is provided a polyethylene composition comprising at least one ethylene-alpha olefin copolymer, wherein the polyethylene composition has:
a melt index (MI_{2.16}, at 190 °C under a load of 2.16 kg) of 0.7 g/10 min or more or more to 2.0 g/10 min or less;
a density of 0.940 g/cm³ or more to 0.965 g/cm³ or less;
a short chain branch (SCB) content of 4.5 or more to 13 or less per 1000 carbon atoms (4.5 to 13 / 1000C); and
wherein, in a crystallization elution fractionation (CEF) analysis of the polyethylene composition for measuring the relative ratio of crystal fraction peak areas eluting with temperature (°C),
a ratio of the crystal fraction peak area eluted at 90 °C or more relative to the total peak area (CEF_{≥90°C}) is 40% or more to 85% or less, and
a ratio of the crystal fraction peak area eluted at 50 °C or more and less than 80 °C relative to the total peak area (CEF_{<80 °C and ≥ 50 °C}) is 8% or more to 30% or less.

In another embodiment of the present disclosure, there is provided a stretched film including the polyethylene composition of the above embodiment.

The terminology used herein is for the purpose of describing particular embodiments only and is not intended to be limiting of the invention.

The singular forms are intended to include the plural forms as well, unless the context clearly indicates otherwise.

In this disclosure, the terminology "include," "comprise," or "have" is used to describe stated features, numbers, steps, components, or combination thereof, and do not preclude the addition of one or more other features, numbers, steps, components, or combinations thereof.

The terminology "about" or "substantially" is intended to have meanings close to numerical values or ranges specified with an allowable error and intended to prevent accurate or absolute numerical values disclosed for understanding of the present invention from being illegally or unfairly used by any unconscionable third party.

Further, in the present disclosure, the (co)polymer is meant to include both a homo-polymer and a co-polymer.

Unless otherwise defined herein, "copolymerization" may mean block copolymerization, random copolymerization, graft copolymerization or alternating copolymerization, and "copolymer" means block copolymer, random copolymer, graft copolymer or alternating copolymer.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present disclosure will be described in more detail.

### Polyethylene Composition

According to an aspect of the present disclosure, there is provided a polyethylene composition comprising at least one ethylene-alpha olefin copolymer, wherein a melt index (MI_{2.16}, at 190 °C under a load of 2.16 kg) measured according to ASTM D1238 is 0.7 g/10 min or more or more to 2.0 g/10 min or less; a density measured according to ISO 1183-2 is 0.940 g/cm³ or more to 0.965 g/cm³ or less; a short chain branch (SCB) content derived from FT-IR analysis is 4.5 or more to 13 or less per 1000 carbon atoms (4.5 to 13 / 1000C); and wherein, in a crystallization elution fractionation (CEF) analysis of the polyethylene composition for measuring the relative ratio of crystal fraction peak areas eluting with temperature (°C), a ratio of the crystal fraction peak area eluted at 90 °C or more relative to the total peak area (CEF_{≥90°C}) is 40% or more to 85% or less, and a ratio of the crystal fraction peak area eluted at 50 °C or more and less than 80 °C relative to the total peak area (CEF_{<80 °C and ≥ 50 °C}) is 8% or more to 30% or less.

In present disclosure, "part by weight" as used herein refers to a relative concept of a ratio of the weight of the remaining material based on the weight of a specific material. For example, in a mixture containing 50 g of material A, 20 g of material B, and 30 g of material C, the amounts of material B and C based on 100 parts by weight of material A are 40 parts by weight and 60 parts by weight, respectively.

Meanwhile, "wt% (% by weight)" refers to an absolute concept of expressing the weight of a specific material in percentage based on the total weight. In the above-described mixture, the contents of material A, B and C based on 100% of the total weight of the mixture are 50 wt %, 20 wt % and 30 wt %, respectively.

In the present disclosure, the polyethylene composition has characteristics suitable for producing a stretched film exhibiting high shrinkage resistance, printability, and transparency, while maintaining mechanical properties, productivity, and stretching stability equal to or superior to conventional ones, by adjusting the balance between mechanical properties and stretchability through optimization of a bimodal slurry polymerization process in the presence of a Ziegler-Natta catalyst or a metallocene catalyst.

Preferably, the polyethylene composition may include one or more ethylene-alpha olefin copolymers. More preferably, the polyethylene composition may include two types of ethylene-alpha olefin copolymers.

The polyethylene composition has a melt index (MI_{2.16}, at 190 °C under a load of 2.16 kg) of 0.7 g/10 min or more to 2.0 g/10 min or less. The melt index of the polyethylene resin composition affects film processability and dimensional stability during the manufacture of a stretched film. If MI_{2.16} is less than 0.70 g/10 min, there is a concern that processability may decrease due to an increase in processing pressure. If it exceeds 2.0 g/10 min, bubble stability may deteriorate due to high flowability, leading to the occurrence of film thickness deviation. Preferably, the melt index (MI_{2.16}, at 190 °C under a load of 2.16 kg) of the polyethylene resin composition may be 0.72 g/10 min or more, 0.75 g/10 min or more, 0.8 g/10 min or more, 0.85 g/10 min or more, 0.9 g/10 min or more, 0.95 g/10 min or more, or 1.0 g/10 min or more, and 1.9 g/10 min or less, 1.8 g/10 min or less, 1.7 g/10 min or less, 1.6 g/10 min or less, 1.5 g/10 min or less, or 1.4 g/10 min or less.

In the present disclosure, the melt index (MI_{2.16}) can be measured at 190 °C under a load of 2.16 kg in accordance with ASTM D 1238 (Condition E, 190 °C, 2.16 kg). For example, the method for measuring the melt index (MI_{2.16}) is as described in Test Example 1 below.

Further, the polyethylene composition has a density of 0.940 g/cm³ or more to 0.965 g/cm³ or less. The density of the polyethylene resin composition affects the stiffness of the stretched film. If the density of the polyethylene resin composition is less than 0.940 g/cm³, there is a concern that the stiffness of the stretched film may decrease, and if it exceeds 0.965 g/cm³, the stretchability of the film may decrease due to an excessively high density. Preferably, the density of the polyethylene resin composition may be 0.941 g/cm³ or more, 0.942 g/cm³ or more, 0.944 g/cm³ or more, or 0.945 g/cm³ or more, and 0.964 g/cm³ or less, 0.963 g/cm³ or less, 0.960 g/cm³ or less, 0.958 g/cm³ or less, 0.955 g/cm³ or less, 0.953 g/cm³ or less, or 0.950 g/cm³ or less.

In the present disclosure, the density (g/cm³) can be measured according to the ISO 1183-2 standard, for example, it may be a value measured at 23 °C. For example, the method for measuring the density (g/cm³) is as described in Test Example 1 below.

Meanwhile, in the polyethylene composition, the SCB content derived from FT-IR analysis relative to the total number of moles of the entire composition is 4.5 (/1,000C) or more to 13 (/1,000C) or less, expressed as the number of short chain branches per 1,000 carbon atoms, i.e., the number of short branched chains having 2 to 7 carbon atoms (/1,000C). Preferably, the SCB content may be 4.6 (/1,000C) or more, 4.8 (/1,000C) or more, 5.0 (/1,000C) or more, 5.5 (/1,000C) or more, 5.8 (/1,000C) or more, 6.0 (/1,000C) or more, 6.5 (/1,000C) or more, 6.8 (/1,000C) or more, or 7 (/1,000C) or more, and 12.5 (/1,000C) or less, 12 (/1,000C) or less, 11.5 (/1,000C) or less, 11 (/1,000C) or less, 10.5 (/1,000C) or less, or 10 (/1,000C) or less.

In the present disclosure, "SCB (Short Chain Branch)" refers to short chains bonded to the polymer main chain of polyethylene in the form of branches, specifically, short branched chains having 2 to 7 carbon atoms bonded to the main chain of polyethylene. Generally, these are short branched chains formed when an alpha-olefin having 4 or more carbon atoms, such as 1-butene, 1-hexene, 1-octene, etc., is used as a comonomer, and the content thereof may be proportional to the content of alpha-olefin monomers included in the polymer chains. The SCB content refers to the number of branched chains having 2 to 7 carbon atoms per 1,000 carbon atoms (unit: /1,000C), and can be calculated through analysis using Proton Nuclear Magnetic Resonance (¹H-NMR) or Fourier Transform Infrared Spectroscopy (FT-IR). In the present disclosure, it was calculated via FT-IR analysis, the specific method of which will be described in detail in the Test Examples below.

Meanwhile, in the polyethylene composition, when measuring the relative ratio of crystal fraction peak areas eluted according to temperature (°C) using a Crystallization Elution Fractionation (CEF) analysis method, the ratio of the crystal fraction peak area eluted at 90 °C or more relative to the total peak area (CEF_{≥ 90 °C}), i.e., the high crystal content, is 40% or more to 85% or less. Preferably, the high crystal content (CEF_{≥90°C}) may be 42% or more, 43.5% or more, 45% or more, 46.5% or more, 48% or more, 50% or more, or 52% or more, and 82% or less, 80% or less, 78% or less, 75% or less, 73.5% or less, 72% or less, 70% or less, 68% or less, 65% or less, 63.5% or less, 62% or less, or 60% or less.

Furthermore, in the polyethylene composition, when measuring the relative ratio of crystal fraction peak areas eluted according to temperature (°C) using the CEF analysis method, the ratio of the crystal fraction peak area eluted at 50 °C or more and less than 80 °C relative to the total peak area (CEF_{<80°C and ≥50°C}), i.e., the low crystal content, is 8% or more to 30% or less. Preferably, the low crystal content (CEF_{<80°C and ≥50°C}) may be 8.2% or more, 8.5% or more, 8.8% or more, 9% or more, 9.2% or more, 9.5% or more, 9.8% or more, 10% or more, 10.5% or more, 11% or more, 11.5% or more, 12% or more, 12.5% or more, 13% or more, 13.5% or more, 14% or more, 14.5% or more, 15% or more, 15.5% or more, 16% or more, 16.5% or more, 17% or more, 17.5% or more, or 18% or more, and 27.5% or less, 27% or less, 26.5% or less, 26% or less, 25.5% or less, 25% or less, 24.5% or less, or 24% or less.

In particular, the polyethylene composition optimizes the content of the low crystalline fraction in the polymer molecular structure according to the CEF analysis method, which not only allows for film production without breakage during high-ratio stretching when processed into a film, but also ensures excellent stretching processability and high mechanical properties. Specifically, the low crystalline fraction content of such a polyethylene composition has a low crystallization temperature and fast relaxation, thereby imparting fluidity to the film during stretching to enable stretching up to a high ratio without breakage. If the content of the low crystalline fraction is insufficient, breakage occurs during high-ratio stretching and thickness deviation increases, which may induce plate-out, appearance defects, and the like. Additionally, if the content of the low crystalline fraction is too high, problems such as film sagging or drawing without orientation may occur during stretching, and mechanical properties such as stiffness may decrease.

The ratio of the contents of the two crystal fractions described above, i.e., the ratio (CEF_{≥90°C} / CEF_{<80°C and ≥50°C}) of the high crystal content (CEF_{≥90°C}) to the low crystal content (CEF_{<80°C and ≥50°C}) may be 2 times or more to 11 times or less, and preferably 2.1 times or more, 2.15 times or more, 2.2 times or more, 2.25 times or more, 2.3 times or more, 2.35 times or more, 2.4 times or more, 2.45 times or more, 2.5 times or more, 2.55 times or more, 2.6 times or more, 2.65 times or more, 2.7 times or more, 2.75 times or more, or 2.8 times or more, and 10.8 times or less, 10.5 times or less, 10.3 times or less, 10 times or less, 9.8 times or less, 9.5 times or less, 9.3 times or less, 9 times or less, 8.8 times or less, 8.5 times or less, 8.3 times or less, 8 times or less, 7.8 times or less, 7.5 times or less, 7.3 times or less, or 7 times or less.

In addition, the polyethylene composition may exhibit crystal fraction peaks eluting at less than 50 °C and at 80 °C or more and less than 90 °C, in addition to the high crystalline fraction peak and the low crystalline fraction peak described above. That is, in the polyethylene composition, when measuring the relative ratio of crystal fraction peak areas eluted according to temperature (°C) using the CEF analysis method, the ratio of the residual area of crystal fraction peaks eluted at less than 50 °C and at 80 °C or more and less than 90 °C (CEF_{<50°C, <90°C and ≥80°C}) may be the content excluding the sum of the contents of the two crystal fractions described above, i.e., the high crystal content (CEF_{≥90°C}) and the low crystal content (CEF_{<80°C and ≥50°C}), from 100% of the total crystal fraction.

For example, the ratio of the residual area of crystal fraction peaks eluted at less than 50 °C and at 80 °C or more and less than 90 °C (CEF_{<50°C, <90°C and ≥80°C}) may be 52% or less or from 0 to 52% or less. Preferably, the medium crystal content (CEF_{<90°C and ≥80°C}) may be 0.1% or more, 0.5% or more, 1% or more, 1.5% or more, 2% or more, 3% or more, 4% or more, 5% or more, 6% or more, 8% or more, 10% or more, 12% or more, or 15% or more, and 50% or less, 48% or less, 45% or less, 43% or less, 40% or less, 38% or less, 35% or less, 33% or less, 30% or less, 28% or less, 26.5% or less, 25% or less, 24.5% or less, or 23% or less.

In the present disclosure, the crystal fraction contents of the polyethylene composition, i.e., the high crystal content (CEF_{≥90°C}), the low crystal content (CEF_{<80°C and ≥50°C}), and the medium crystal content (CEF_{<90°C and ≥80°C}), are measured by the CEF analysis method. For example, the crystal fraction content of the polyethylene composition by CEF analysis can be obtained using an Agilent Technologies 7890A instrument from PolymerChar. For instance, after dissolving a sample in 20 mL of 1,2,4-trichlorobenzene at a concentration of 1.5 mg/mL, the sample is dissolved by raising the temperature from 30 °C to 150 °C at a rate of 40 °C/min, recrystallized by lowering the temperature to 35 °C at a rate of 0.5 °C/min, and eluted by raising the temperature again to 140 °C at a rate of 1 °C/min to obtain a CEF graph. The CEF graph thus obtained represents the relative ratio of crystal fraction peak areas eluted according to temperature (°C), which can be a CEF curve graph where the x-axis is elution temperature (°C) and the y-axis is dW/dt. In this CEF curve graph, taking the total peak area as 100%, the ratio of the peak area in the region of 90 °C or more is expressed as the high crystal content (CEF_{≥90°C}), the ratio of the peak area in the region from 50 °C or more to less than 80 °C is expressed as the low crystal content (CEF_{<80°C and ≥50°C}), and the ratio of the peak area in the region from 80 °C or more to less than 90 °C is expressed as the medium crystal content (CEF_{<90°C and ≥80°C}). Specifically, the method for measuring the crystal fraction content via CEF analysis is as described in Test Example 1 below.

Meanwhile, the polyethylene composition may have a number average molecular weight (Mn) of 5,000 g/mol or more to 20,000 g/mol or less, and preferably 5,200 g/mol or more, 5,500 g/mol or more, 5,800 g/mol or more, 6,000 g/mol or more, 6,200 g/mol or more, 6,500 g/mol or more, 6,800 g/mol or more, 7,000 g/mol or more, 8,200 g/mol or more, 8,500 g/mol or more, 8,800 g/mol or more, 9,000 g/mol or more, 9,200 g/mol or more, 9,500 g/mol or more, 9,800 g/mol or more, 10,000 g/mol or more, or 10,500 g/mol or more, and 19,500 g/mol or less, 19,000 g/mol or less, 18,500 g/mol or less, 18,000 g/mol or less, 17,500 g/mol or less, 17,000 g/mol or less, 16,500 g/mol or less, 16,000 g/mol or less, 15,500 g/mol or less, 15,000 g/mol or less, 14,500 g/mol or less, 14,000 g/mol or less, or 13,500 g/mol or less.

Further, the polyethylene composition may have a weight average molecular weight (Mw) of 80,000 g/mol or more to 160,000 g/mol or less, and preferably 82,000 g/mol or more, 85,000 g/mol or more, 88,000 g/mol or more, 90,000 g/mol or more, 92,000 g/mol or more, 95,000 g/mol or more, 98,000 g/mol or more, 100,000 g/mol or more, or 105,000 g/mol or more, and 158,000 g/mol or less, 155,000 g/mol or less, 153,000 g/mol or less, 150,000 g/mol or less, 148,000 g/mol or less, 145,000 g/mol or less, 143,000 g/mol or less, 140,000 g/mol or less, 138,000 g/mol or less, 135,000 g/mol or less, 133,000 g/mol or less, 130,000 g/mol or less, 128,000 g/mol or less, or 125,000 g/mol or less.

The molecular weight distribution (Mw/Mn) of the polyethylene composition may be 8 or more to 20 or less. Preferably, the molecular weight distribution (Mw/Mn) of the polyethylene composition may be 8 or more, 8.2 or more, 8.5 or more, 8.7 or more, 9 or more, 9.2 or more, 9.3 or more, 9.5 or more, 9.7 or more, or 10 or more, and 19.5 or less, 19 or less, 18.5 or less, 18 or less, 17.5 or less, 17 or less, 16.5 or less, 16 or less, 15.5 or less, 15 or less, 14.5 or less, 14 or less, 13.5 or less, 13 or less, 12.5 or less, 12 or less, 11.5 or less, 11 or less, or 10.5 or less.

For example, the polyethylene composition exhibits a bimodal molecular weight distribution. Such a bimodal molecular weight distribution means that the molecular weight distribution curve on a GPC graph has two peaks. In this context, even if the two peaks do not exist as completely separated peaks but partially overlap such that no minimum value exists between the maximum values of the two peaks, it is included as a peak if it exists in the form of a shoulder peak. That is, if it cannot be interpreted as a single peak forming a normal distribution but can be deconvoluted into two distributions, it is defined as a bimodal structure.

Such a bimodal molecular weight distribution signifies an increase in the low-molecular-weight and high-molecular-weight distributions within the polyethylene resin composition. Due to this molecular weight distribution structure, improved physical properties can be exhibited. Particularly, compared to a polyethylene resin composition exhibiting a unimodal molecular weight distribution, a molecular structural form that acts advantageously for biaxial stretching can be strengthened, thereby exhibiting superior stretchability.

The polyethylene composition of the present disclosure optimizes a bimodal slurry polymerization process in the presence of a Ziegler-Natta catalyst or a metallocene catalyst-for example, by optimizing not only the total input amount of comonomers but also the ratio of input into each reactor-thereby adjusting the balance between mechanical properties and stretchability. Accordingly, it maintains mechanical properties, productivity, and stretching stability equal to or superior to conventional ones, and possesses characteristics suitable for manufacturing a stretched film having high shrinkage resistance, printability, and transparency.

In the present disclosure, the weight average molecular weight (Mw) and the number average molecular weight (Mn) are conversion values with respect to standard polystyrene measured using gel permeation chromatography (GPC, manufactured by Waters). However, the Mw and Mn are not limited thereto and may be measured by other methods known in the art. For example, the method for measuring Mw and Mn is as described in Test Example 1 below.

The polyethylene composition according to an embodiment of the present disclosure optimizes the melt index, density, SCB content, and high crystal content as described above, so that two types of loss moduli (G"ₐ: loss modulus @ alpha relaxation and G"_{b}: loss modulus @ beta relaxation) are formed in a balanced manner. This enables the manufacture of a stretched film with excellent film quality after stretching, including stretching processability, transparency, stiffness, and shrinkage rate.

Here, beta relaxation appears in a lower temperature range than alpha relaxation and is mainly caused by branches attached to the polymer main chain. In the case of polyethylene, it appears within a range of -50 °C or more to 20 °C or less. Alpha relaxation appears in a higher temperature range than beta relaxation and is caused by crystal relaxation, resulting from defects inside crystals or slip between crystals, and mainly appears in a range of 30 °C or more to 100 °C or less.

Specifically, the polyethylene composition may have a loss modulus G"ₐ of alpha relaxation (loss modulus @ alpha relaxation) of 95 MPa or more to 180 MPa or less, appearing in a range of 30 °C or more to 100 °C or less in a dynamic viscoelasticity curve measured using Dynamic Mechanical Analysis (DMA). Alpha relaxation (crystal relaxation) is a movement within the crystalline region (chain folds, crystal slip, etc.), and as the alpha relaxation peak increases, stretchability and haze may deteriorate, but modulus and the like can be improved. Preferably, the loss modulus G"ₐ of alpha relaxation (loss modulus @ alpha relaxation) may be 95 MPa or more, 100 MPa or more, 110 MPa or more, 120 MPa or more, or 130 MPa or more, and 180 MPa or less, 175 MPa or less, 170 MPa or less, 165 MPa or less, or 160 MPa or less.

Further, the polyethylene composition may have a loss modulus G"_{b} of beta relaxation (loss modulus @ beta relaxation) of 95 MPa or more to 180 MPa or less, appearing in a range of -50 °C or more to 20 °C or less in a dynamic viscoelasticity curve measured using DMA. Beta relaxation indicates the movement of side chains in the amorphous region, and as the beta relaxation peak increases, stretchability, thickness uniformity of uniform thickness deviation, and haze can be improved. Preferably, the loss modulus G"_{b} of beta relaxation (loss modulus @ beta relaxation) may be 95 MPa or more, 100 MPa or more, 105 MPa or more, or 110 MPa or more, and 180 MPa or less, 170 MPa or less, 160 MPa or less, 150 MPa or less, 140 MPa or less, or 130 MPa or less.

Additionally, the ratio (G"ₐ / G"_{b}) of the loss modulus G"ₐ of alpha relaxation to the loss modulus G"_{b} of beta relaxation may be 0.95 or more to 1.65 or less. Preferably, the loss modulus ratio G"ₐ / G"_{b} may be 1.0 or more, 1.05 or more, or 1.1 or more, and 1.60 or less, 1.55 or less, 1.50 or less, 1.45 or less, or 1.4 or less. The polyethylene composition allows for the control of beta and alpha relaxation moduli through adjustment of the SCB content. As the beta relaxation peak increases, stretchability improves; as the alpha relaxation peak increases, stretchability and haze decrease, but mechanical properties such as modulus can be improved.

In the present disclosure, G"ₐ and G"_{b} can be measured using DMA. For example, these values are obtained by measuring the modulus according to temperature changes through oscillation under conditions of a heating rate of 5 °C/min from -90 °C to 140 °C, a strain of 0.1%, and a frequency of 1 Hz using a Q800 DMA from TA Instruments, and then calculating the loss modulus G"ₐ appearing in a range of 30 °C or more to 100 °C or less and the loss modulus G"_{b} appearing in a range of - 50 °C or more to 20 °C or less. Here, the polyethylene composition can be measured by producing a sheet having a thickness of 10 micrometers (µm) or more to 1000 micrometers (µm) or less, for example, 20 µm or more to 800 µm or less, 50 µm or more to 650 µm or less, 100 µm or more to 600 µm or less, or about 500 µm, by pressing at 180 °C or more to 200 °C or less, for example, 190 °C using a hot press.

However, the solid rheological properties related to dynamic viscoelasticity, i.e., G"ₐ and G"_{b}, are not limited thereto and may be measured by other methods known in the art. For example, the method for measuring G"ₐ and G"_{b} is as described in Test Example 2 below.

Meanwhile, the polyethylene composition according to an embodiment of the present disclosure may include one or more ethylene-alpha olefin copolymers. The ethylene-alpha olefin copolymer may include ethylene and one or more alpha-olefins selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and mixtures thereof. Preferably, the ethylene-alpha olefin copolymer may be at least one selected from the group consisting of an ethylene/1-hexene copolymer and an ethylene/1-butene copolymer.

The polyethylene composition can more easily realize the physical properties described above when it is the copolymer mentioned above. However, the type of the polyethylene composition is not limited thereto, and various types known in the art may be provided as long as they exhibit the physical properties described above.

Meanwhile, the ethylene-alpha olefin copolymer included in the polyethylene composition may be manufactured using a Ziegler-Natta catalyst or a metallocene catalyst, and preferably, may be manufactured in the presence of a metallocene catalyst.

Specifically, the ethylene-alpha olefin copolymer may be an ethylene-alpha olefin copolymer prepared by polymerizing olefin-based monomers in the presence of a hybrid supported metallocene catalyst comprising: one or more types of first metallocene compounds selected from compounds represented by the following Chemical Formula 1; one or more types of second metallocene compounds selected from compounds represented by the following Chemical Formula 2; and a carrier supporting the first and second metallocene compounds.

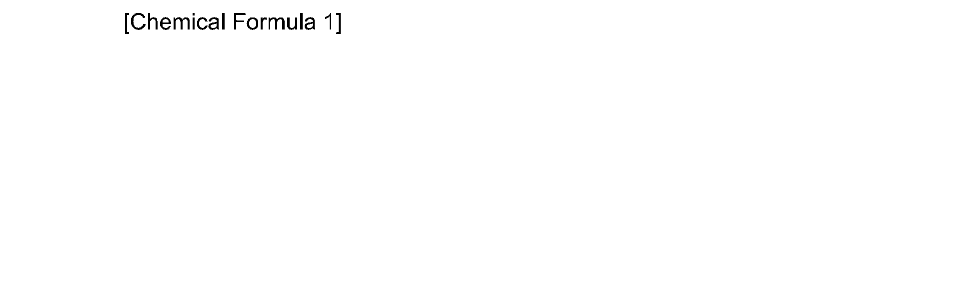

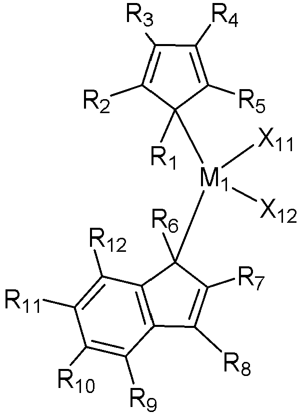

In Chemical Formula 1,
M₁ is a Group 4 transition metal,
X₁₁ and X₁₂ are each independently substituted or unsubstituted C₁₋₂₀ alkyl or halogen,
R₁ to R₅ and R₇ to R₁₂ are each independently hydrogen, substituted or unsubstituted C₁₋₂₀ alkyl, substituted or unsubstituted C₆₋₆₀ aryl, or -(CH₂)ₙ₁-O-R₁₃,
R₆ is substituted or unsubstituted C₁₋₂₀ alkyl, substituted or unsubstituted C₆₋₆₀ aryl, or -(CH₂)ₙ₁-O-R₁₃,
provided that at least one of R₁ to R₁₂ is -(CH₂)ₙ₁-O-R₁₃,
R₁₃ is substituted or unsubstituted C₁₋₂₀ alkyl, and
n1 is an integer of 0 to 10, 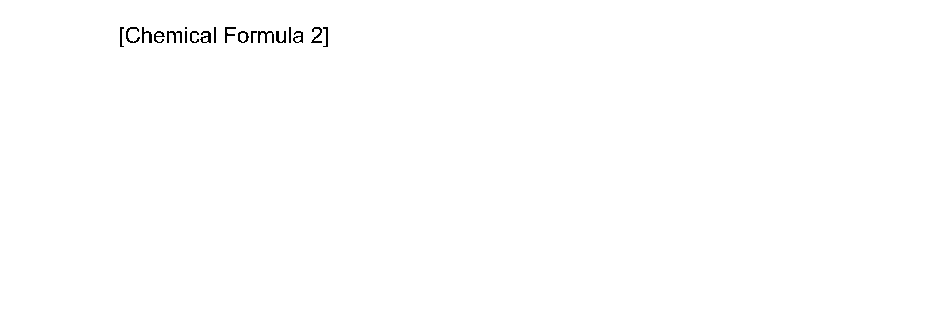 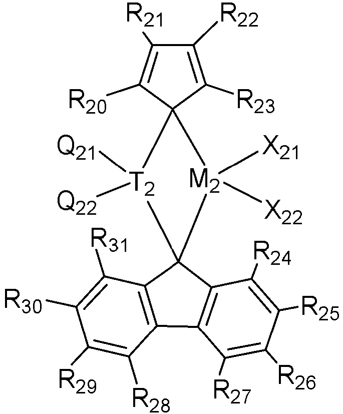 in Chemical Formula 2,
   M₂ is a Group 4 transition metal,
   X₂₁ and X₂₂ are each independently substituted or unsubstituted C₁₋₂₀ alkyl or halogen,
   T₂ is C (carbon) or Si (silicon),
   Q₂₁ and Q₂₂ are each independently substituted or unsubstituted C₁₋₂₀ alkyl, substituted or unsubstituted C₆₋₆₀ aryl, or -(CH₂)ₙ₂-O-R₃₂, or Q₂₁ and Q₂₂ are bonded to each other to form a substituted or unsubstituted C₃₋₂₀ cycloalkyl ring,
   R₂₀ to R₃₁ are each independently hydrogen, substituted or unsubstituted C₁₋₂₀ alkyl, substituted or unsubstituted C₆₋₆₀ aryl, or -(CH₂)ₙ₂-O-R₃₂, or two adjacent groups among R₂₀ to R₃₁ are bonded to form a substituted or unsubstituted C₃₋₂₀ cycloalkyl ring,
   provided that at least one of R₂₀ to R₃₁, Q₂₁, and Q₂₂ is -(CH₂)n₂-O-R₃₂,
   R₃₂ is substituted or unsubstituted C₁₋₂₀ alkyl, and
   n2 is an integer of 0 to 10.

In the present disclosure, the substituents of the aforementioned chemical formula are described in more detail as follows.

The halogen may be fluorine (F), chlorine (Cl), bromine (Br) or iodine (I).

The C₁₋₂₀ alkyl may be linear, branched, or cyclic alkyl. Specifically, the C₁₋₂₀ alkyl may be C₁₋₂₀ linear alkyl; C₁₋₁₀ linear alkyl; C₁₋₅ linear alkyl; C₃₋₂₀ branched or cyclic alkyl; C₃₋₁₅ branched or cyclic alkyl; or C₃₋₁₀ branched or cyclic alkyl. More specifically, the C₁₋₂₀ alkyl may be a methyl group, an ethyl group, an n-propyl group, an iso-propyl group, an n-butyl group, an iso-butyl group, a tert-butyl group, an n-pentyl group, an iso-pentyl group, or a cyclohexyl group.

The C₃₋₂₀ cycloalkyl ring may be a ring composed of carbon atoms. It may be a C₃₋₂₀ hydrocarbon ring; a C₃₋₁₅ hydrocarbon ring; or a C₃₋₁₀ hydrocarbon ring. More specifically, the C₃₋₂₀ cycloalkyl ring may be a cyclopropane ring, a cyclobutene ring, a cyclopentane ring, or a cyclohexane ring.

The C₂₋₂₀ alkenyl may be linear, branched, or cyclic alkenyl. Specifically, the C₂₋₂₀ alkenyl may be C₂₋₂₀ linear alkenyl, C₂₋₁₀ linear alkenyl, C₂₋₅ linear alkenyl, C₃₋₂₀ branched alkenyl, C₃₋₁₅ branched alkenyl, C₃₋₁₀ branched alkenyl, C₅₋₂₀ cyclic alkenyl, or C₅₋₁₀ cyclic alkenyl. More specifically, the C₂₋₂₀ alkenyl may be ethenyl, propenyl, butenyl, pentenyl, or cyclohexenyl.

The C₁₋₂₀ alkoxy may be a linear, branched, or cyclic alkoxy group. Specifically, the C₁₋₂₀ alkoxy may be a C₁₋₂₀ linear alkoxy group; a C₁₋₁₀ linear alkoxy group; a C₁₋₅ linear alkoxy group; a C₃₋₂₀ branched or cyclic alkoxy group; a C₃₋₁₅ branched or cyclic alkoxy group; or a C₃₋₁₀ branched or cyclic alkoxy group. More specifically, the C₁₋₂₀ alkoxy may be a methoxy group, an ethoxy group, an n-propoxy group, an iso-propoxy group, an n-butoxy group, an iso-butoxy group, a tert-butoxy group, an n-pentoxy group, an iso-pentoxy group, a neo-pentoxy group, or a cyclohexyloxy group.

The C₂₋₂₀ alkoxyalkyl may be a substituent having a structure including -R_{y}-O-R_{z}, in which one or more hydrogens of the alkyl group (-R_{y}) are substituted with an alkoxy group (-O-R_{z}). Specifically, the C₂₋₂₀ alkoxyalkyl may include methoxymethyl, methoxyethyl, ethoxymethyl, iso-propoxymethyl, iso-propoxyethyl, iso-propoxyhexyl, tert-butoxymethyl, tert-butoxyethyl, or tert-butoxyhexyl.

The C₆₋₆₀ aryl may be a monocyclic, bicyclic, or tricyclic aromatic hydrocarbon. Specifically, the C₆₋₆₀ aryl may be a phenyl group, a naphthyl group, or an anthracenyl group.

The C₇₋₂₀ alkylaryl may be a substituent where one or more hydrogens of the aryl are substituted with alkyl. Specifically, the C₇₋₂₀ alkylaryl may be methylphenyl, ethylphenyl, n-propylphenyl, iso-propylphenyl, n-butylphenyl, iso-butylphenyl, tert-butylphenyl, or cyclohexylphenyl.

Further, the Group 4 transition metal may be titanium, zirconium, hafnium, etc.

The hybrid supported metallocene catalyst of the present disclosure is a hybrid catalyst that includes a first metallocene compound capable of imparting high molecular weight and high crystallinity and a second metallocene compound capable of imparting low molecular weight and low crystallinity.

In the copolymerization in a single reactor using a hybrid supported metallocene catalyst, it is important to control how the differences in polymerization characteristics between the metallocene compounds constituting the hybrid-supported metallocene catalyst are exhibited under a single copolymerization condition. In particular, in order to obtain a polyethylene copolymer for biaxial stretching, it is necessary for a high molecular weight/high crystallinity component and a low molecular weight/low crystallinity component to be present together. Accordingly, in the present disclosure, a polyethylene copolymer is provided which is produced under a single copolymerization condition using a hybrid supported metallocene catalyst including a combination of the first metallocene compound and the second metallocene compound, thereby exhibiting the respective characteristics of each compound.

The first metallocene compound represented by Chemical Formula 1 has a characteristic of exhibiting a lower rate of polymerization of comonomers and a higher rate of polymerization of ethylene monomers as compared to the second metallocene compound, due to the structure of a non-bridged ligand bonded to the central metal. As a result, under ethylene/1-hexene copolymerization conditions, it can provide polyethylene of high molecular weight and high crystallinity, with a small number of short chain branches (SCBs) and a large Mw.

Meanwhile, the second metallocene compound represented by Chemical Formula 2 has a characteristic of exhibiting a higher rate of polymerization of comonomers and a lower rate of polymerization of ethylene monomers as compared to the first metallocene compound, due to the structure of a bridged ligand bonded to the central metal. As a result, under ethylene/1-hexene copolymerization conditions, it can provide a polyethylene of low molecular weight and low crystallinity, with a large number of SCBs and a small Mw.

Preferably, the central metal (M₁) of Chemical Formula 1 may specifically be a Group 4 transition metal of Ti, Zr, or Hf, and more specifically Hf or Zr.

Preferably, X₁₁ and X₁₂ may each independently be methyl or chloro, and more preferably, X₁₁ and X₁₂ are both methyl, or both chloro.

Preferably, R₁ to R₅ and R₇ to R₁₂ may each independently be hydrogen, substituted or unsubstituted C₁₋₂₀ alkyl, substituted or unsubstituted C₆₋₂₀ aryl, or - (CH₂)ₙ₁-O-R₁₃, and R₆ may be substituted or unsubstituted C₁₋₂₀ alkyl, substituted or unsubstituted C₆₋₂₀ aryl, or -(CH₂)ₙ₁-O-R₁₃, provided that one or two of R₁ to R₁₂ are - (CH₂)ₙ₁-O-R₁₃.

Preferably, one of R₇ or R₈ is -(CH₂)ₙ₁-O-R₁₃, while the other thereof, R₁ to R₅ and R₉ to R₁₂ may each independently be hydrogen, substituted or unsubstituted C₁₋₂₀ alkyl, substituted or unsubstituted C₆₋₆₀ aryl, or -(CH₂)ₙ₁-O-R₁₃, and R₆ may be substituted or unsubstituted C₁₋₂₀ alkyl, substituted or unsubstituted C₆₋₆₀ aryl, or - (CH₂)ₙ₁-O-R₁₃.

Preferably, R₁ to R₅ may each independently be hydrogen, methyl, isopropyl, n-butyl, phenyl, or -(CH₂)ₙ₁-O-R₁₃. More preferably, R₁ to R₅ may each independently be hydrogen, methyl, n-butyl, phenyl, or tert-butoxyhexyl.

Preferably, R₆ may be C₁₋₂₀ alkyl or C₆₋₂₀ aryl, which is unsubstituted or substituted with C₆₋₁₀ aryl or Si(R')₃, wherein R' is C₁₋₂₀ alkyl or C₆₋₁₀ aryl. More preferably, R₆ may be C₁₋₂₀ alkyl or C₆₋₂₀ aryl, which is unsubstituted or substituted with phenyl, trimethylsilyl, or triphenylsilyl. Most preferably, R₆ may be methyl, ethyl, isopropyl, benzyl, trimethylsilylmethyl, or phenyl.

Preferably, one of R₇ or R₈ is -(CH₂)ₙ₁-O-R₁₃, while the other thereof and R₉ to R₁₂ are hydrogen. More preferably, one of R₇ or R₈ is tert-butoxyhexyl, while the other thereof and R₉ to R₁₂ are hydrogen.

Preferably, R₁₃ may be tert-butyl.

Preferably, n1 may be an integer of 4 to 10, more preferably, n1 may be an integer of 4 to 7, and most preferably, n1 may be 6.

Preferably, the first metallocene compound represented by the Chemical Formula 1 may be any one selected from the group consisting of:

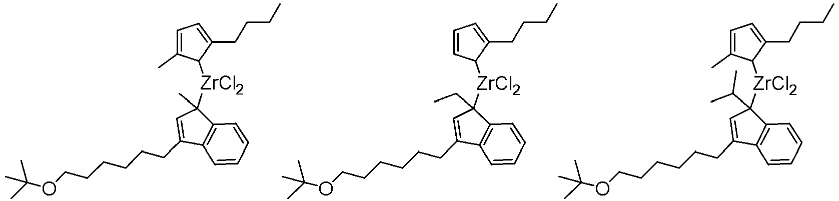

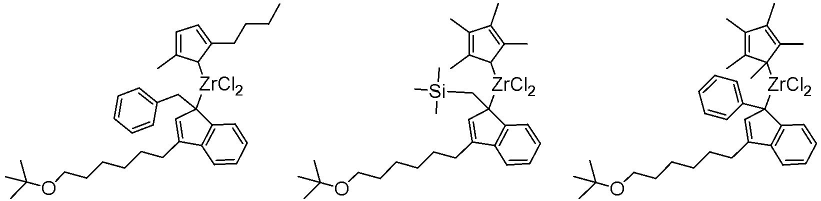

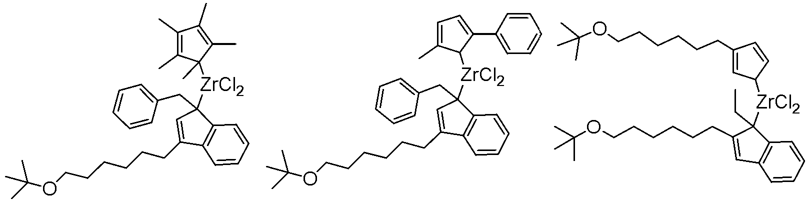

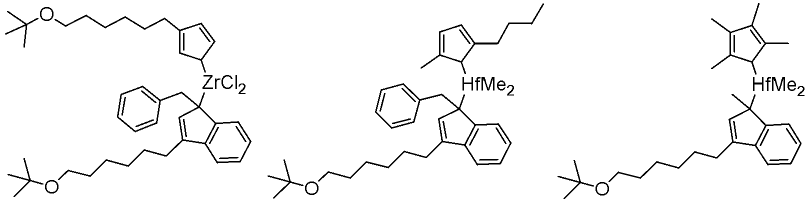

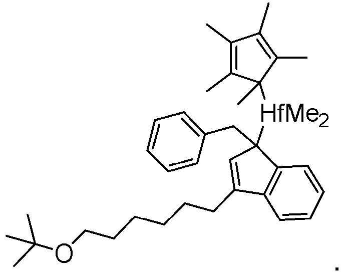

Meanwhile, the method for preparing the first metallocene compound represented by Chemical Formula 1 is not particularly limited, but, as one example, the compound may be prepared by a method such as Reaction Scheme 1 below.

Although the compound represented by Chemical Formula 1 is difficult to synthesize due to the steric hindrance of the indenyl ligand, the compound of Chemical Formula 1 may be produced with high yield and high purity according to a method such as Reaction Scheme 1 below.

Accordingly, in one embodiment of the present disclosure, the compound represented by Chemical Formula 1 may be prepared by a preparation method comprising:
a step of preparing a ligand of Chemical Formula 1-3 by reacting a compound represented by Chemical Formula 1-1 with a compound represented by Chemical Formula 1-2; and
a step of reacting the ligand of Chemical Formula 1-3 with a compound represented by Chemical Formula 1-4 and a halogen salt of a transition metal represented by Chemical Formula 1-5:

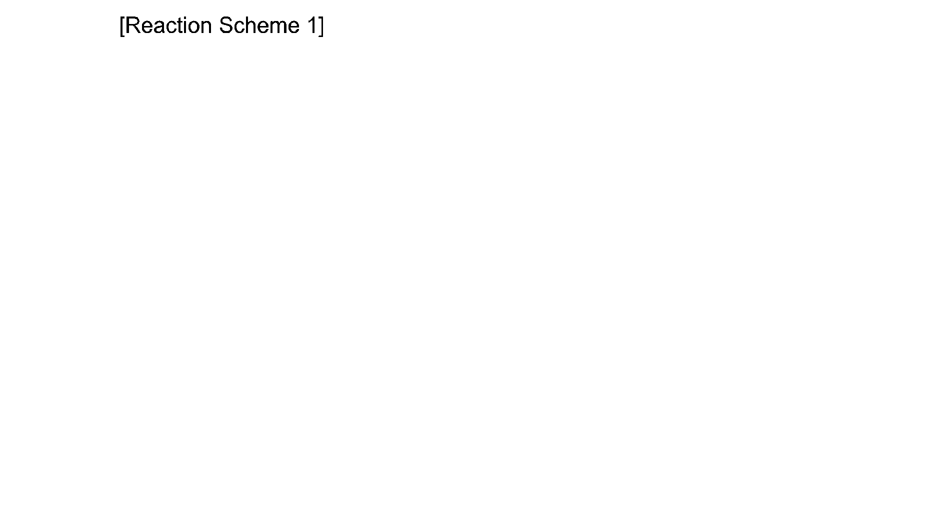

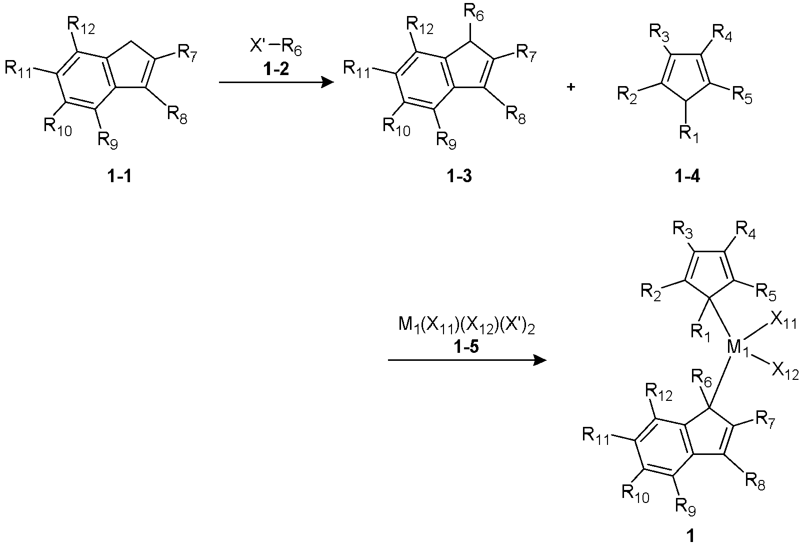

In Reaction Scheme 1,
M₁, X₁₁, X₁₂ and R₁ to R₁₂ are as defined in Chemical Formula 1, and
X' is each independently halogen.

Preferably, the central metal (M₂) of Chemical Formula 2 may specifically be a Group 4 transition metal of Ti, Zr, or Hf, and more specifically Zr.

Preferably, X₂₁, and X₂₂ may each independently be methyl or chloro, and more preferably, X₂₁, and X₂₂ are both chloro.

Preferably, T₂ may be C (carbon).

Preferably, at least one of R₂₀ to R₃₁, Q₂₁, and Q₂₂ may be -(CH₂)ₙ₂-O-R₃₂. More preferably, at least one of R₂₀ to R₂₅, Q₂₁, and Q₂₂ may be -(CH₂)ₙ₂-O-R₃₂. More preferably, one or two of R₂₀ to R₃₁, Q₂₁, and Q₂₂ may be -(CH₂)ₙ₂-O-R₃₂. More preferably, one or two of R₂₀ to R₂₅, Q₂₁, and Q₂₂ may be -(CH₂)ₙ₂-O-R₃₂. Most preferably, one or two of R₂₀ to R₂₅, Q₂₁, and Q₂₂ may be tert-butoxyhexyl.

Preferably, Q₂₁ and Q₂₂ may each independently be substituted or unsubstituted C₁₋₂₀ alkyl, substituted or unsubstituted C₆₋₂₀ aryl, or -(CH₂)ₙ₂-O-R₃₂, or Q₂₁ and Q₂₂ may be bonded to each other to form a substituted or unsubstituted C₃₋₂₀ cycloalkyl ring. More preferably, Q₂₁ and Q₂₂ may each independently be methyl, ethyl, isopropyl, phenyl, or -(CH₂)ₙ₂-O-R₃₂, or Q₂₁ and Q₂₂ may be bonded to each other to form a cyclopentane ring or a cyclohexane ring.

Preferably, R₂₀ to R₂₃ may each independently be hydrogen, C₁₋₂₀ alkyl, C₆₋₂₀ aryl, or -(CH₂)ₙ₂-O-R₃₂. More preferably, R₂₀ to R₂₃ may each independently be hydrogen, methyl, n-butyl, phenyl, or tert-butoxyhexyl. More preferably, one of R₂₀ to R₂₃ is tert-butoxyhexyl or n-butyl while the others are hydrogen, or two of R₂₀ to R₂₃ are each independently methyl, n-butyl, or phenyl while the others are hydrogen.

Preferably, R₂₄ to R₃₁ may each independently be hydrogen, C₁₋₁₀ alkyl, C₆₋₂₀ aryl, or -(CH₂)ₙ₂-O-R₃₂, or two adjacent groups among R₂₄ to R₃₁ may be bonded to form a substituted or unsubstituted C₃₋₁₀ cycloalkyl ring. More preferably, R₂₄ to R₃₁ may each independently be hydrogen, tert-butyl, or tert-butoxyhexyl, or two adjacent groups among R₂₄ to R₃₁ may be bonded to form a cyclohexane ring substituted with four methyl groups.

Preferably, R₃₂ may be tert-butyl.

Preferably, n2 may be an integer of 4 to 10, more preferably, n2 may be an integer of 4 to 7, and most preferably, n2 may be 6.

Preferably, the metallocene compound represented by the Chemical Formula 2 may be any one selected from the group consisting of:

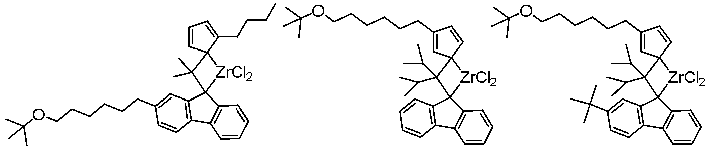

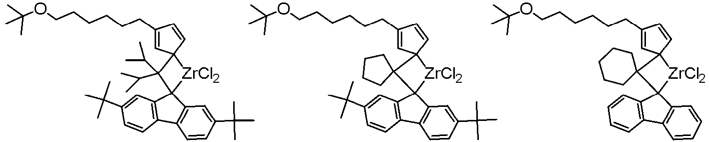

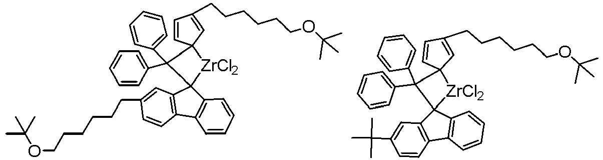

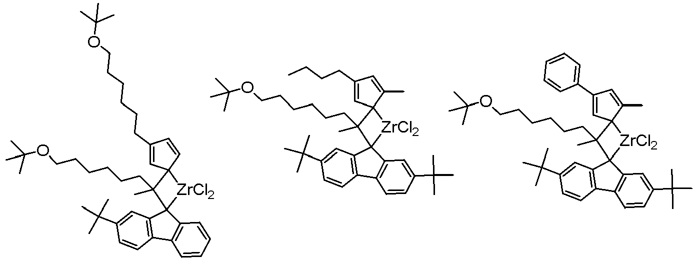

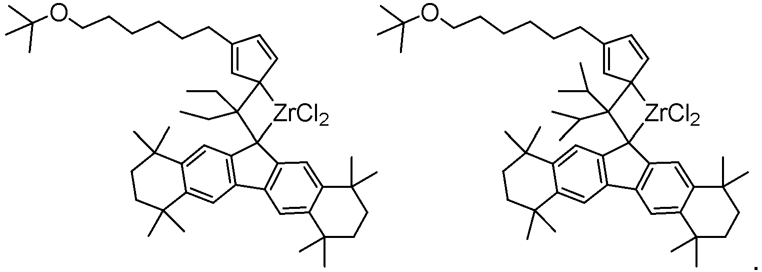

Meanwhile, the method for preparing the second metallocene compound represented by Chemical Formula 2 is not particularly limited, but, as one example, the compound may be prepared by a method such as Reaction Scheme 2 below.

Accordingly, in one embodiment of the present disclosure, the compound represented by Chemical Formula 2 may be prepared by a preparation method comprising:
a step of preparing a compound represented by Chemical Formula 2-3 by reacting a compound represented by Chemical Formula 2-1 with a compound represented by Chemical Formula 2-2;
a step of preparing a ligand of Chemical Formula 2-5 by reacting the compound represented by Chemical Formula 2-3 with a compound represented by Chemical Formula 2-4; and
a step of reacting the ligand of Chemical Formula 2-5 with a halogen salt of a transition metal represented by Chemical Formula 2-6:

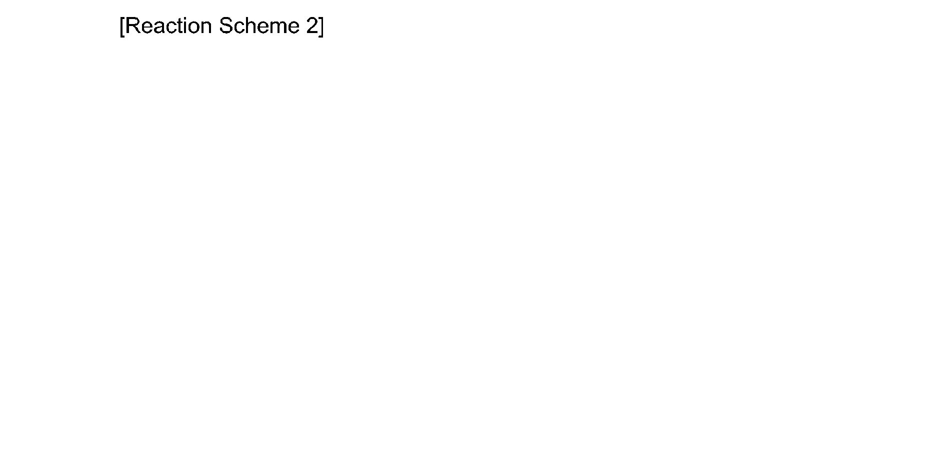

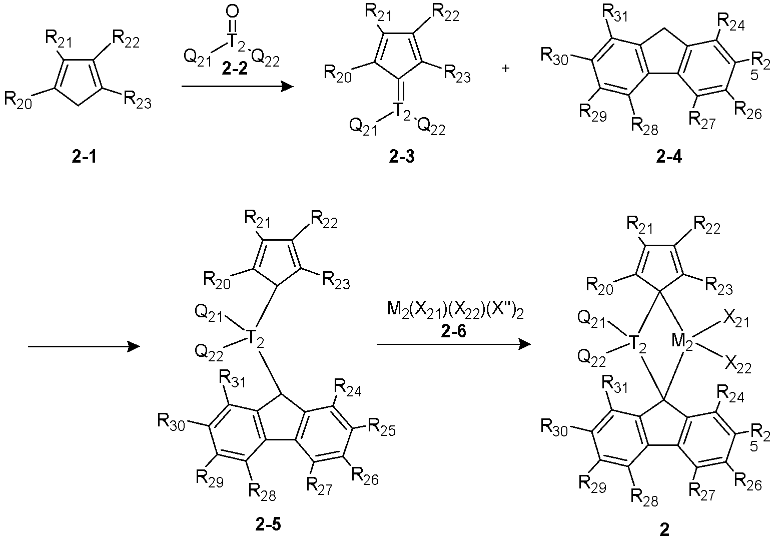

In Reaction Scheme 2,
M₂, X₂₁, X₂₂, T₂, Q₂₁, Q₂₂ and R₂₀ to R₃₁ are as defined in Chemical Formula 2, and
X" is each independently halogen.

In the hybrid supported metallocene catalyst of the present disclosure, the first metallocene compound and the second metallocene compound may be supported at a molar ratio of 1:1 to 25:1, 2:1 to 25:1, 3:1 to 25:1, 3:1 to 23:1, or 3:1 to 20:1. When the ratio of the first metallocene compound to the second metallocene compound is less than 1:1, the high-crystalline content becomes low, making it difficult for a stretched film to have heat resistance. When the ratio of the first metallocene compound to the second metallocene compound exceeds 25:1, the low-crystalline content becomes low, making biaxial stretching processability difficult.

In the hybrid supported metallocene catalyst of the present disclosure, a support containing a hydroxyl group on the surface may be used as a support for supporting the first metallocene compound and the second metallocene compound. Preferably, as the support, a material having highly reactive groups such as hydroxyl groups, silanol groups, or siloxane groups on its surface may be used. For this purpose, the surface may be modified by calcination or dried to remove moisture from the surface.

For example, silica prepared by calcining silica gel, silica dried at high temperature, silica-alumina, or silica-magnesia may be used. These supports may typically contain components such as oxides, carbonates, sulfates, and nitrates, including Na₂O, K₂CO₃, BaSO₄, and Mg(NO₃)₂.

When used in the form of a supported catalyst, the resulting polymer exhibits excellent particle morphology and bulk density, making it suitable for conventional slurry, bulk, or gas-phase polymerization processes. Among various supports, silica is particularly advantageous because the functional groups of the transition metal compounds are chemically bonded and supported thereon. As a result, catalyst leaching from the support surface during the ethylene polymerization process is minimal, thereby reducing fouling caused by polymer adhesion to the reactor walls or agglomeration between polymer particles in slurry or gas-phase polymerization.

The support may have an average particle size (D50) of 20 to 60 µm. When having the particle size described above, transition metal compounds may be supported with higher efficiency, and as a result, catalyst activity can be increased. More specifically, it can be 20 µm or more, or 25 µm or more, and 60 µm or less, or 50 µm or less.

In the present disclosure, the average particle diameter (D50) of the support is a particle diameter at the 50% point of cumulative distribution of the number of particles according to particle size (diameter). The D50 may be measured using a laser diffraction method. Specifically, the support to be measured is dispersed in the dispersion medium such as deionized water and introduced into a commercially available particle size measuring device (e.g., Microtrac S3500). Then, a particle size distribution is obtained by measuring a difference in diffraction patterns according to particle size when the particles pass through the laser beam. In the measuring device, the average particle diameter is obtained by calculating a particle diameter at a point of reaching 50% of cumulative distribution of the number of particles according to particle diameter.

In addition, when supported on the support, the first and second metallocene compounds may each be supported in an amount of, for example, 1 mmol or more, 10 mmol or more, 15 mmol or more, 20 mmol or more, 25 mmol or more, or 30 mmol or more, and 500 mmol or less, 400 mmol or less, 300 mmol or less, 200 mmol or less, 100 mmol or less, 80 mmol or less, 60 mmol or less, or 52.5 mmol or less, per 1,000 g of the support. When supported within this range, the catalyst can exhibit appropriate catalytic activity, which may be advantageous in terms of maintaining catalyst performance and cost efficiency.

In addition, the hybrid metallocene catalyst may further include a cocatalyst so that it exhibits high activity and improves process stability.

Specifically, the cocatalyst may include one or more compounds represented by Chemical Formula 3 below.

[Chemical Formula 3] -[Al(R₄₁)-O]a-

In Chemical Formula 3,
R₄₁ is halogen; or halogen-substituted or unsubstituted C₁₋₂₀ hydrocarbyl; and
a is an integer of 2 or more.

Meanwhile, in this disclosure, the hydrocarbyl group refers to a monovalent functional group derived from a hydrocarbon by the removal of one hydrogen atom, and may include an alkyl group, an alkenyl group, an alkynyl group, an aryl group, an aralkyl group, an aralkenyl group, an aralkynyl group, an alkylaryl group, an alkenylaryl group, and an alkynylaryl group, etc. Further, a C₁₋₂₀ hydrocarbyl group may be a C₁₋₁₅ or C₁₋₁₀ hydrocarbyl group. Specifically, a C₁₋₂₀ hydrocarbyl group may be a linear, branched or cyclic alkyl group such as a methyl group, an ethyl group, an n-propyl group, an iso-propyl group, an n-butyl group, an iso-butyl group, a tert-butyl group, an n-pentyl group, an n-hexyl group, an n-heptyl group, or a cyclohexyl group; or an aryl group such as a phenyl group, a naphthyl group, or an anthracenyl group.

Examples of the compound represented by Chemical Formula 3 may include alkyl aluminoxane-based compounds such as modified methylaluminoxane (MMAO), methylaluminoxane (MAO), ethylaluminoxane, isobutylaluminoxane, or butylaluminoxane, and any one or a mixture of two or more thereof may be used.

Among the above compounds, the cocatalyst may more specifically be an alkyl aluminoxane-based cocatalyst such as methylaluminoxane.

The alkyl aluminoxane-based cocatalyst can further enhance catalyst activity by stabilizing the first and second transition metal compounds and acting as a Lewis acid, as it includes a metal element capable of forming a bond with a functional group introduced into the bridge group of the first and second transition metal compounds through Lewis acid-base interaction.

In addition, the amount of the cocatalyst used may be appropriately adjusted depending on the desired effect of the catalyst and the physical properties of the resulting polyethylene. For example, when silica is used as the support, the cocatalyst may be supported in an amount of 100 g or more, 1000 g or more, or 2000 g or more, and 6000 g or less, 5500 g or less, or 5400 g or less, based on 1,000 g of silica.

The hybrid supported metallocene catalyst having the above-described configuration according to the present disclosure may be prepared by a method including: a step of supporting a cocatalyst compound on a support, and a step of supporting the first and second metallocene compounds on the support. The order of supporting the cocatalyst and the first and second metallocene compounds may be varied as needed, and the order of supporting the first and second metallocene compounds may also be changed. Alternatively, the first and second metallocene compounds may also be supported simultaneously. Considering the effects of the structure formed depending on the order of supporting, it is particularly advantageous to first support the cocatalyst on a support, followed by sequentially supporting the first and second metallocene compounds. This approach can provide a supported catalyst exhibiting high catalytic activity and improved process stability during polyethylene production.

As described above, the hybrid supported metallocene catalyst according to the present disclosure may exhibit excellent catalytic activity by including the first and second metallocene compounds having specific structures. Accordingly, the hybrid supported metallocene catalyst can be suitably used for the polymerization of ethylene and olefin-based monomers.

Meanwhile, an alpha-olefin may be used as the olefin monomer to be polymerized with ethylene. Specific examples of such alpha-olefins include 1-butene, 1-pentene, 4-methyl-1-pentene, 1-hexene, 1-heptene, 1-octene, 1-decene, 1-undecene, 1-dodecene, 1-tetradecene, 1-hexadecene, or 1-eicosene, and the like, and copolymerization may be performed by mixing one or more or two or more of these monomers. More specifically, the olefin monomer may be at least one of 1-butene and 1-hexene.

The input amount of the olefin monomer may be determined according to the physical properties of the polyethylene copolymer to be prepared. For example, considering the physical properties of the polyethylene copolymer to be implemented In the present disclosure, the olefin monomer may be introduced in an amount of 0.1 wt% or more to 10.0 wt% or less relative to the total weight of ethylene. More specifically, the olefin monomer may be introduced in an amount of 0.2 wt% or more, 0.5 wt% or more, 0.8 wt% or more, 1.0 wt% or more, 1.2 wt% or more, 1.5 wt% or more, 1.6 wt% or more, 1.8 wt% or more, 2.0 wt% or more, or 2.1 wt% or more, and 9.8 wt% or less, 9.5 wt% or less, 9.0 wt% or less, 8.5 wt% or less, 8.0 wt% or less, 7.5 wt% or less, 7.0 wt% or less, 6.5 wt% or less, 6 wt% or less, 5.5 wt% or less, 5 wt% or less, 4.5 wt% or less, 4 wt% or less, 3.5 wt% or less, or 3.0 wt% or less, relative to the total weight of ethylene.

The polymerization reaction may be performed under conditions of hydrogen introduction.

Specifically, the hydrogen may be introduced in an amount of 600 ppm or less, or 0 or more to 600 ppm or less, based on the total weight of ethylene, which is a monomer. More specifically, the hydrogen may be introduced in an amount of 0.3 ppm or more, 0.5 ppm or more, 1 ppm or more, 3 ppm or more, 5 ppm or more, 10 ppm or more, 15 ppm or more, 20 ppm or more, 25 ppm or more, 28 ppm or more, 30 ppm or more, 32 ppm or more, or 33 ppm or more, and 580 ppm or less, 550 ppm or less, 500 ppm or less, 450 ppm or less, 400 ppm or less, 380 ppm or less, 360 ppm or less, 350 ppm or less, 340 ppm or less, 335 ppm or less, or 333 ppm or less, based on the total weight of ethylene.

When introduced within the above range, it is easier to realize the physical properties of the aforementioned polyethylene copolymer.

The polymerization reaction may be performed by a gas phase polymerization reaction or a slurry polymerization reaction.

Accordingly, it may be performed using a single gas phase polymerization reactor, a continuous slurry polymerization reactor, or a loop slurry reactor.

Preferably, the polymerization reaction may be performed using a bimodal continuous slurry polymerization reactor, for example, a bimodal slurry polymerization process using two continuous stirred-tank reactors (CSTR) consisting of a first reactor and a second reactor. Here, the first reactor and the second reactor may be connected in series.

In particular, the polyethylene composition is manufactured by a bimodal slurry polymerization process, and can be manufactured by performing a primary polymerization reaction using the first reactor to manufacture a first polyethylene, and then moving it to the second reactor to perform a secondary polymerization reaction.

In such a bimodal slurry polymerization process, the first reactor and the second reactor may perform the polymerization process under conditions where the input amounts of ethylene monomer, one or more alpha-olefin comonomers, and hydrogen gas are different from each other.

Specifically, in the bimodal slurry polymerization process, the first reactor may perform a polymerization process by introducing ethylene monomer and one or more alpha-olefin comonomers in the presence of hydrogen gas, and the second reactor may perform a polymerization process between ethylene monomer and one or more alpha-olefin comonomers without introducing hydrogen gas.

For example, the polyethylene composition may be manufactured by performing a bimodal slurry polymerization process using two continuous stirred-tank reactors (CSTR) consisting of a first reactor and a second reactor in the presence of the above-described hybrid supported metallocene catalyst. In this case, the first reactor may manufacture a first polyethylene by performing a primary polymerization reaction while introducing ethylene monomer and one or more alpha-olefin comonomers in the presence of hydrogen gas. Into this first reactor, triethylaluminum (TEAL) or the like may be additionally introduced along with the above-described hybrid supported catalyst. Thereafter, the first polyethylene polymerized in the first reactor is moved to the second reactor connected in series with the first reactor, and then a secondary polymerization reaction may be performed while introducing ethylene monomer and one or more alpha-olefin comonomers without introducing hydrogen gas.

The bimodal slurry polymerization process may consist of performing a primary polymerization reaction by introducing hydrogen gas in the first reactor to manufacture a first polyethylene, moving the first polyethylene to the second reactor connected in series with the first reactor, and then performing a secondary polymerization reaction without introducing hydrogen gas.

Specifically, in the first reactor of the bimodal slurry polymerization process, hydrogen gas may be introduced in an amount of 600 ppm or less, or 0 or more to 600 ppm or less, based on the total weight of ethylene. More specifically, the hydrogen may be introduced in an amount of 0.3 ppm or more, 0.5 ppm or more, 1 ppm or more, 3 ppm or more, 5 ppm or more, 10 ppm or more, 15 ppm or more, 20 ppm or more, 25 ppm or more, 28 ppm or more, 30 ppm or more, 32 ppm or more, or 33 ppm or more, and 580 ppm or less, 550 ppm or less, 500 ppm or less, 450 ppm or less, 400 ppm or less, 380 ppm or less, 360 ppm or less, 350 ppm or less, 340 ppm or less, 335 ppm or less, or 333 ppm or less, based on the total weight of ethylene.

Further, in the first reactor of the bimodal slurry polymerization process, the olefin monomer may be introduced in an amount of 0.1 wt% or more to 9.9 wt% or less relative to the total weight of ethylene. More specifically, the olefin monomer may be introduced in an amount of 0.2 wt% or more, 0.5 wt% or more, 0.8 wt% or more, 1.0 wt% or more, 1.2 wt% or more, 1.5 wt% or more, 1.6 wt% or more, 1.8 wt% or more, 2.0 wt% or more, or 2.1 wt% or more, and 9.8 wt% or less, 9.5 wt% or less, 9.0 wt% or less, 8.5 wt% or less, 8.0 wt% or less, 7.5 wt% or less, 7.0 wt% or less, 6.5 wt% or less, 6 wt% or less, 5.5 wt% or less, 5 wt% or less, 4.5 wt% or less, 4 wt% or less, 3.5 wt% or less, or 3.0 wt% or less, relative to the total weight of ethylene.

In the second reactor of the bimodal slurry polymerization process, the olefin monomer may be introduced in an amount of 0.1 wt% or more to 9.9 wt% or less relative to the total weight of ethylene. More specifically, the olefin monomer may be introduced in an amount of 0.2 wt% or more, 0.3 wt% or more, 0.4 wt% or more, 0.5 wt% or more, 0.6 wt% or more, 0.7 wt% or more, or 0.8 wt% or more, and 9.8 wt% or less, 9.0 wt% or less, 6.0 wt% or less, 5.0 wt% or less, 4.0 wt% or less, 3.0 wt% or less, 2.5 wt% or less, 2.0 wt% or less, 1.8 wt% or less, 1.5 wt% or less, 1.3 wt% or less, 1.2 wt% or less, or 1.0 wt% or less, relative to the total weight of ethylene.

For example, the bimodal slurry polymerization process may consist of: introducing hydrogen gas in an amount of 15 g/hr or less, or 0 or more to 15 g/hr or less, or 0.1 g/hr or more to 14 g/hr or less, or 0.2 g/hr or more to 13 g/hr or less, or 0.5 g/hr or more to 12 g/hr or less, or 0.7 g/hr or more to 11 g/hr or less, or 0.9 g/hr or more to 10.5 g/hr or less, or 1 g/hr or more to 10 g/hr or less, in the first reactor; introducing ethylene monomer at 300 mL/min or more to 700 mL/min or less, or 320 mL/min or more to 600 mL/min or less, or 350 mL/min or more to 580 mL/min or less, or 380 mL/min or more to 550 mL/min or less, or 400 mL/min or more to 500 mL/min or less; and introducing one or more alpha-olefin comonomers in an amount of 20 mL/min or less, or 0 or more to 20 mL/min or less, or 0.1 mL/min or more to 18 mL/min or less, or 0.5 mL/min or more to 16 mL/min or less, or 1 mL/min or more to 15 mL/min or less, or 2 mL/min or more to 14 mL/min or less, or 3 mL/min or more to 13 mL/min or less, or 5 mL/min or more to 12 mL/min or less, to manufacture a first polyethylene by performing a primary polymerization reaction; thereafter moving the first polyethylene to the second reactor connected in series with the first reactor; and then performing a secondary polymerization reaction by introducing ethylene monomer at 300 mL/min or more to 700 mL/min or less, or 320 mL/min or more to 600 mL/min or less, or 300 mL/min or more to 550 mL/min or less, or 320 mL/min or more to 500 mL/min or less, or 340 mL/min or more to 450 mL/min or less, or 350 mL/min or more to 400 mL/min or less, and introducing one or more alpha-olefin comonomers in an amount of 20 mL/min or less, or 0 or more to 20 mL/min or less, or 0.1 mL/min or more to 18 mL/min or less, or 0.2 mL/min or more to 15 mL/min or less, or 0.3 mL/min or more to 12 mL/min or less, or 0.4 mL/min or more to 10 mL/min or less, or 0.5 mL/min or more to 8 mL/min or less, or 0.8 mL/min or more to 6 mL/min or less, or 1 mL/min or more to 4 mL/min or less, without introducing hydrogen gas.

Meanwhile, in the polymerization reaction, the above-described hybrid supported catalyst may be injected after being dissolved or diluted in an aliphatic hydrocarbon solvent having 4 to 12 carbon atoms, such as isobutane, pentane, hexane, heptane, nonane, decane, and isomers thereof, an aromatic hydrocarbon solvent such as toluene and benzene, or a hydrocarbon solvent substituted with chlorine atoms such as dichloromethane and chlorobenzene. The solvent used here is preferably used after removing a small amount of water or air, which acts as a catalyst poison, by treatment with a small amount of alkyl aluminum, and it is also possible to carry out the process by further using a cocatalyst.

Non-limiting examples of such alkyl aluminum compounds include trimethylaluminum, triethylaluminum, triisobutylaluminum, tripropylaluminum, tributylaluminum, dimethylchloroaluminum, triisopropylaluminum, tri-sec-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminum methoxide, or dimethylaluminum ethoxide, and the like.

In addition, the polymerization reaction may be performed at a temperature of 40 °C or more, 50 °C or more, 60 °C or more, 70 °C or more, 75 °C or more, or 80 °C or more, and 120 °C or less, 115 °C or less, 110 °C or less, 105 °C or less, 100 °C or less, 95 °C or less, 90 °C or less, 88 °C or less, 85 °C or less, or 82 °C or less. Further, when the pressure condition is further controlled during the polymerization reaction, it may be performed under a pressure of 2 bar or more, 3 bar or more, 5 bar or more, or 6 bar or more, and 50 bar or less, 40 bar or less, 30 bar or less, 20 bar or less, 15 bar or less, 12 bar or less, 10 bar or less, or 8 bar or less. When polymerization proceeds under such temperature and pressure, the physical properties of the desired ethylene-alpha olefin copolymer can be more easily realized.

Preferably, the polymerization reaction may be performed using a bimodal continuous slurry polymerization reactor, and during such a bimodal slurry polymerization process, the polymerization reaction temperature in the first reactor may be 40 °C or more, 50 °C or more, 60 °C or more, 70 °C or more, 75 °C or more, or 80 °C or more, and 120 °C or less, 115 °C or less, 110 °C or less, 105 °C or less, 100 °C or less, 95 °C or less, 90 °C or less, 88 °C or less, or 85 °C or less. Further, when the pressure condition in the first reactor is further controlled, it may be performed under a pressure of 2 bar or more, 3 bar or more, 5 bar or more, or 6 bar or more, and 50 bar or less, 40 bar or less, 30 bar or less, 20 bar or less, 15 bar or less, 12 bar or less, 10 bar or less, or 8 bar or less.

Further, during the bimodal slurry polymerization process, the polymerization reaction temperature in the second reactor may be performed in a range lower than the polymerization reaction temperature of the first reactor, and for example, the polymerization process of the second reactor may be performed with a temperature difference of at least 1 °C, 2 °C, or about 5 °C. Preferably, the polymerization reaction temperature of the second reactor may be 40 °C or more, 50 °C or more, 60 °C or more, 70 °C or more, or 75 °C or more, and 115 °C or less, 110 °C or less, 105 °C or less, 100 °C or less, 95 °C or less, 90 °C or less, 85 °C or less, 80 °C or less, or 78 °C or less. Further, the pressure condition during the polymerization reaction of the second reactor may also be performed in a range lower than the polymerization reaction pressure of the first reactor, and for example, the polymerization process of the second reactor may be performed with a pressure difference of at least 1 bar, 2 bar, 3 bar, or about 4 bar. The polymerization reaction pressure in the second reactor may be 2 bar or more or 3 bar or more, and 49 bar or less, 40 bar or less, 30 bar or less, 20 bar or less, 15 bar or less, 12 bar or less, 10 bar or less, 8 bar or less, 5 bar or less, or 4 bar or less.

The ethylene-alpha olefin copolymer is manufactured using a catalyst that hybrid-supports both a metallocene compound exhibiting high molecular weight and high crystallinity and a metallocene compound exhibiting low molecular weight and low crystallinity, thereby having a high crystal content of 45 wt% or more and improving the main chain average molecular weight of the high crystalline fraction. Accordingly, when a stretched film is manufactured with a polyethylene composition including at least one of the ethylene-alpha olefin copolymers, heat resistance such as tensile modulus and shrinkage rate of the stretched film can be improved.

Accordingly, the present disclosure provides a uniaxially or biaxially stretched film comprising a polyethylene composition including at least one of the ethylene-alpha olefin copolymers.

### Stretched Film

The polyethylene composition having the above-described physical properties maintains excellent mechanical properties, productivity, and stretching stability, and can stably form a uniaxially or biaxially stretched film having high shrinking resistance, uniform thickness deviation, and excellent printability and transparency.

Meanwhile, the stretched film may be manufactured by a conventional film manufacturing method except for using the above-described polyethylene composition.

The stretched film exhibits improved transparency and strength characteristics along with excellent stretchability due to the inclusion of the above-described polyethylene.

Specifically, when the stretched film has a thickness of 10 to 100 µm, it may be a uniaxially stretched film having a draw ratio in a machine direction (MD) or a transverse direction (TD) of 5 or more, or from 5 to 10. Alternatively, the stretched film may be a biaxially stretched film having a draw ratio in the MD of 5 or more, or from 5 to 8, and a draw ratio in the TD of 8 or more, or from 8 to 10.

Here, the draw ratio of the stretched film may be a value measured when the thickness of the film is 10 to 100 µm, for example, 20 to 95 µm, 30 to 90 µm, or 40 to 85 µm.

For example, the polyethylene stretched film according to the present disclosure can be produced by preparing a polyethylene composition sheet with a thickness of 0.6 mm or more to 0.9 mm or less, for example, 0.8 mm, using a lab extruder line from Bruckner (L/D ratio: 42, screw diameter: 25 mm, Melt/T-Die temperature: 220 °C). Thereafter, biaxial stretching is performed on the polyethylene composition sheet having a width and length of 80 mm or more to 100 mm or more respectively, for example, a size of 90 mm * 90 mm, using KARO 5.0 equipment to manufacture the polyethylene stretched film. Specific film manufacturing methods and conditions are as described in Test Example 3 below.

In addition, the polyethylene stretched film according to the present disclosure may further include additives well known in the art in addition to the above-described polyethylene copolymer. Specifically, such additives include solvents, heat stabilizers, antioxidants, UV absorbers, light stabilizers, metal deactivators, fillers, reinforcing agents, plasticizers, lubricants, emulsifiers, pigments, optical brighteners, flame retardants, antistatic agents, foaming agents, and the like. The type of the additive is not particularly limited, and general additives known in the art may be used.

The polyethylene stretched film according to an embodiment of the present disclosure manufactured by the above-described method can improve performance with excellent expandable processing area characteristics and mechanical properties.

The polyethylene stretched film may have a tensile modulus in the MD, measured in accordance with ASTM D 882, of 1,000 MPa or more, 1,050 MPa or more, 1,100 MPa or more, 1,130 MPa or more, 1,150 MPa or more, 1,200 MPa or more, 1,250 MPa or more, or 1,300 MPa or more. However, from the perspective of simultaneously realizing excellent drawability and transparency of the final film, it may be 5,000 MPa or less, 4,500 MPa or less, 4,000 MPa or less, 3,500 MPa or less, 3,000 MPa or less, 2,500 MPa or less, 2,200 MPa or less, or 2,000 MPa or less.

Here, the physical properties of the stretched film may be values measured when the thickness of the film is 10 µm or more to 100 µm or less, for example, 12 µm or more to 85 µm or less, 15 µm or more to 50 µm or less, 18 µm or more to 45 µm or less, or 20 µm or more to 30 µm or less. Specifically, the values may be measured when the stretched film is stretched at a draw ratio of 5X8 (MD X TD) and has a thickness of about 20 µm or more to about 30 µm or less.

Further, the polyethylene stretched film may have a tensile modulus in the TD, measured in accordance with ASTM D 882, of 1,000 MPa or more, 1,100 MPa or more, 1,200 MPa or more, 1,300 MPa or more, 1,400 MPa or more, 1,450 MPa or more, 1,500 MPa or more, 1,550 MPa or more, 1,580 MPa or more, 1,600 MPa or more, 1,620 MPa or more, or 1,635 MPa or more. However, from the perspective of simultaneously realizing excellent drawability and transparency of the final film, it may be 5,000 MPa or less, 4,500 MPa or less, 4,000 MPa or less, 3,800 MPa or less, 3,500 MPa or less, 3,200 MPa or less, 3,000 MPa or less, 2,800 MPa or less, or 2,500 MPa or less.

The polyethylene stretched film may have a haze, measured in accordance with ASTM 1003, of 9% or less, 8.8% or less, 8.5% or less, 8.3% or less, 8% or less, 7.8% or less, 7.5% or less, 7.3% or less, or 7% or less.

When the polyethylene stretched film has a size of 210 mm in width and 297 mm in length, the thickness uniformity of the stretched film-calculated as a standard deviation value of 20 or more thickness measurements taken at 20 or more nonoverlapping points of the stretched film-i.e., the thickness deviation ratio of the stretched film, may be 7% or less, or 0.001% or more to 7% or less. Preferably, the thickness uniformity of the stretched film may be 6.8% or less, 6.5% or less, 6.2% or less, 6% or less, 5.8% or less, 5.5% or less, 5.2% or less, 5% or less, 4.8% or less, 4.5% or less, 4.2% or less, 4% or less, or 3.8% or less, and considering actual process limits, it may be 0.001% or more, or 0.01% or more. In this case, the thickness of the film can be measured with a Mitutoyo 547-401A thickness gauge. However, the thickness measurement method is not limited thereto and may be measured by other methods known in the art.

In the present disclosure, the evaluation of the physical properties of the stretched film can be performed according to the above-mentioned standards, and the specific method is as described in Test Example 3 below.

In the present disclosure, by adjusting the balance between mechanical properties and stretchability through a bimodal slurry polymerization process employing a Ziegler-Natta catalyst or a metallocene catalyst to realize excellent mechanical properties along with stretchability due to superior flowability as described above, it is possible to stably manufacture a stretched film having excellent mechanical properties, productivity, and stretching stability, as well as high shrinkage resistance, printability, and transparency.

### [ADVANTAGEOUS EFFECTS]

The polyethylene according to the present disclosure has excellent effects of manufacturing a stretched film having high shrinkage resistance, uniform thickness deviation, and outstanding printability and transparency, with satisfactory film processability and productivity along with excellent mechanical properties and stretching stability.

### [BRIEF DESCRIPTION OF THE DRAWINGS]

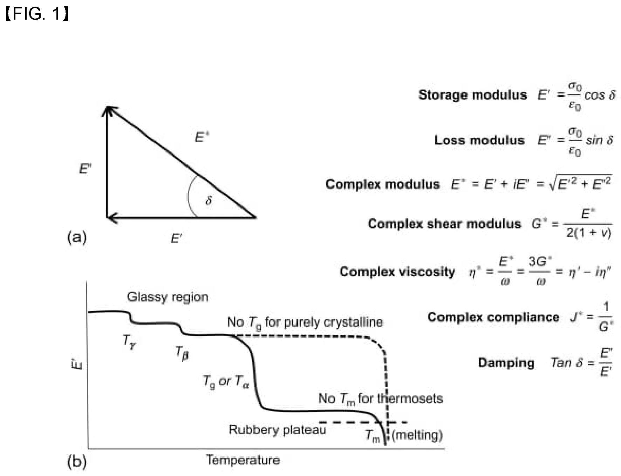

FIG. 1 shows a method for calculating rheological properties according to an embodiment of the present disclosure.

### [DETAILED DESCRIPTION OF THE EMBODIMENTS]

Hereinafter, embodiments of the present invention will be described in more detail in the following examples. However, the following examples are for illustrative purposes only and are not intended to limit the present invention.

### [Examples]

### <Preparation of metallocene compounds>

### Synthesis Example 1: Preparation of First metallocene compound

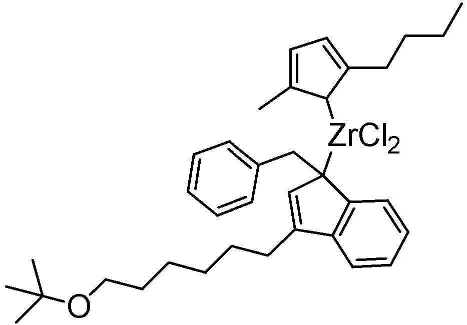

### (1) Synthesis of Ligand

Under Ar atmosphere, 120 g (440 mmol) of 3-(6-*tert*-butoxyhexyl)-1*H*-indene and 1.1 L of *n*-hexane were charged into a dried 2 L Schlenk flask. After cooling to -78 °C, 185 mL (1.05 eq., 462.5 mmol) of 2.5 M n-BuLi in hexane was added dropwise. The reaction mixture was slowly raised to room temperature and stirred for 8 hours. After cooling again to -78 °C, 82.8 g (1.1 eq., 484 mmol) of benzyl bromide was added dropwise. The mixture was slowly raised to room temperature and stirred for 24 hours, and then the organic layer was separated using water and diethyl ether. The organic layer was dried with MgSO₄ to obtain 137 g (377 mmol, 85.7% yield) of 3-(6-*tert-*butoxyhexyl)-1-benzyl-1*H*-indene.

¹H NMR (500 MHz, CDCl₃): 1.22 (9H, s), 1.32 (4H, m), 1.44 (2H, m), 1.57 (2H, m), 1.73 (2H, m), 2.59 (2H, m), 3.38 (2H, t), 3.75 (1H, m), 6.14 (1H, brs), 7.14-7.45 (9H, m).

### (2) Synthesis of metallocene compound

Under Ar atmosphere, 9.06 g (25 mmol) of the ligand synthesized above and 90 mL of diethyl ether were charged into a dried 250 mL Schlenk flask. After cooling to -78 °C, 11 mL (1.05 eq., 27.5 mmol) of 2.5 M n-BuLi in hexane was added dropwise. The reaction mixture was slowly raised to room temperature and stirred for 8 hours. After cooling again to -78 °C, 10.6 g (1.0 eq., 25 mmol) of (1-*n*-butyl-3-methylcyclopentadienyl)ZrCl₃ dimethoxyethane complex together with 30 mL of diethyl ether was charged. The mixture was slowly raised to room temperature and stirred for 24 hours, followed by drying under reduced pressure and charging with dichloromethane. The resulting suspension was filtered under Ar atmosphere to remove LiCl, and the filtrate was dried under reduced pressure, followed by charging with *n*-hexane. The resulting suspension was then filtered under Ar atmosphere to obtain 8.76 g (13.3 mmol, 53.2% yield) of the metallocene compound A4 in solid form.

¹H NMR (500 MHz, CDCl₃): 0.88-0.91 (3H, m), 1.22 (9H, s), 1.29-1.40 (8H, m), 1.52-1.76 (4H, m), 2.06 (3H, s), 2.11-2.22 (2H, m), 2.59-2.68 (2H, m), 2.99-3.07 (2H, m), 3.34 (2H, t), 4.43 (1H, dt), 5.21 (1H, dt), 5.78 (1H, t), 6.47 (1H, brs), 7.11-7.63 (9H, m).

### Synthesis Example 2: Preparation of Second metallocene compound

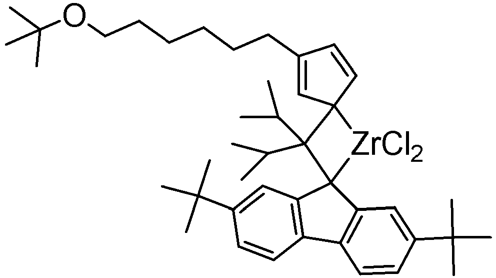

### (1) Synthesis of Ligand

Under Ar atmosphere, 100 g (450 mmol) of 2-(6-*tert-*butoxyhexyl)cyclopentadiene, 103 g (2.0 eq., 900 mmol) of 2,4-dimethyl-3-pentanone, and 1 L of ethanol were charged into a dried 250 mL Schlenk flask. After cooling to 0 °C, 48.0 g (1.5 eq., 675 mmol) of pyrrolidine was added dropwise. The reaction mixture was slowly raised to room temperature and stirred for 24 hours. The reaction mixture was then cooled to 0 °C, followed by the addition of 1 L of 10 vol% aqueous acetic acid, and stirred for 30 minutes. The organic layer was separated using water and diethyl ether, and dried with MgSO₄ to obtain 44.9 g (141 mmol, 31.3% yield) of 2-(6-*tert*-butoxyhexyl)-5-(2,4-dimethylpentan-3-ylidene)-cyclopenta-1,3-diene.

Under Ar atmosphere, 1.66 g (10 mmol) of fluorene and 40 mL of tetrahydrofuran were charged into another dried 250 mL Schlenk flask. After cooling to -78 °C, 4.8 mL (1.2 eq., 12 mmol) of 2.5 M n-BuLi in hexane was added dropwise. The reaction mixture was slowly raised to room temperature and stirred for 8 hours. After cooling again to -78 °C, 3.19 g (1.0 eq., 10 mmol) of the above-synthesized 2-(6-*tert*-butoxyhexyl)-5-(2,4-dimethylpentan-3-ylidene)-cyclopenta-1,3-diene together with 10 mL of tetrahydrofuran was charged. The mixture was slowly raised to room temperature and stirred for 24 hours, and then the organic layer was separated using water and diethyl ether. The organic layer was dried with MgSO₄ to obtain 3.94 g (8.12 mmol, 81.2% yield) of the ligand.

¹H NMR (500 MHz, CDCl₃): 0.87 (12H, d), 1.12 (9H, s), 1.34 (2H, m), 1.41 (2H, m), 1.46 (2H, m), 1.55 (4H, m), 2.18 (2H, t), 2.91 (2H, d), 3.36 (2H, t), 3.73 (1H, s), 6.15 (1H, t), 6.25 (1H, brs), 7.25-7.44 (4H, m), 7.55 (2H, dd), 7.90 (2H, dd).

### (2) Synthesis of metallocene compound

Under Ar atmosphere, 3.94 g (8.12 mmol) of the ligand synthesized above, 5 mL of methyl *t*-butyl ether, and 20 mL of toluene were charged into a dried 250 mL Schlenk flask. After cooling to -78 °C, 7.1 mL (2.2 eq., 17.8 mmol) of 2.5 M n-BuLi in hexane was added dropwise. The reaction mixture was slowly raised to room temperature and stirred for 8 hours. After cooling again to -78 °C, 3.06 g (1.0 eq., 8.12 mmol) of ZrCl₄(THF)₂ together with 5 mL of methyl *t*-butyl ether was charged. The mixture was slowly raised to room temperature and stirred for 24 hours, followed by drying under reduced pressure at room temperature to remove methyl *t*-butyl ether. The resulting toluene suspension was filtered under Ar atmosphere to remove LiCl, and the filtrate was dried under reduced pressure at 50 °C, followed by charging with *n*-hexane. The resulting suspension was then filtered under Ar atmosphere to obtain 2.61 g (4.04 mmol, 49.8% yield) of the metallocene compound B2 in solid form.

¹H NMR (500 MHz, C₆D₆): ¹H NMR (500 MHz, C₆D₆): 0.91 (12H, d), 1.13 (9H, s), 1.15-1.38 (6H, m), 1.40-1.55 (6H, m), 3.22 (2H, t), 5.32-6.12 (3H, m), 7.20-7.32 (2H, t), 7.47-7.55 (2H, dd), 7.72 (2H, d), 7.93 (2H, t).

### <Preparation of supported catalysts>

### Catalyst Preparation Example 1: Preparation of hybrid supported metallocene catalyst 1

Silica (SP 952, manufactured by Grace Davison) was dehydrated and dried under vacuum at 200 °C for 12 hours.

800 g of the dried silica was charged into a 20 L SUS reactor, and 6 kg of a methylaluminoxane (MAO) solution (10 wt% in toluene) was added thereto. The mixture was slowly reacted while stirring at 70 °C for 1 hour. After completion of the reaction, unreacted aluminum compounds were thoroughly removed by repeatedly washing with a sufficient amount of toluene. A solution prepared by dissolving 30.1 g of the first metallocene compound prepared in Synthesis Example 1 and 3.0 g of the second metallocene compound prepared in Synthesis Example 2 in toluene was then sequentially added to the reactor, and the mixture was reacted while stirring at 40 °C for 4 hours. At this time, the molar ratio of the first metallocene compound of Synthetic Example 1 to the second metallocene compound of Synthetic Example 2 was 12. After washing with a sufficient amount of toluene, the product was vacuum dried to obtain hybrid supported metallocene catalyst 1 in the form of a solid powder.

### <Preparation of polyethylene compositions>

### Example 1: Preparation of polyethylene composition A

Polyethylene composition A was slurry-polymerized through a bimodal polymerization process using two 100 L continuous stirred-tank reactors (CSTR) in the presence of the hybrid supported metallocene catalyst 1 prepared in Catalyst Preparation Example 1.

Specifically, in the first reactor, a primary polymerization reaction was performed by adjusting the input amounts of hydrogen and comonomers under the conditions described in Table 1 below to manufacture a first polyethylene. At this time, 75 mL/hr of triethylaluminum (TEAL) with a concentration of 0.3 mM was used as a cocatalyst. Here, the primary polymerization reaction was performed under conditions of a temperature of 80 °C and a pressure of 6 bar to 8 bar. After moving the first polyethylene polymerized in the first reactor to a second reactor connected in series, a secondary polymerization reaction was performed by adjusting the input amount of comonomers without the introduction of hydrogen under the conditions described in Table 1 below. Here, the secondary polymerization reaction was performed under conditions of a temperature of 75 °C and a pressure of 3 bar to 4 bar.

Based on the total weight of the polymerization product obtained as a result of the secondary polymerization reaction, 200 ppm of Irganox 1010 (manufactured by BASF) as a primary antioxidant, 400 ppm of Irgafos 168 (manufactured by BASF) as a secondary antioxidant, and 500 ppm of calcium stearate (Ca-St) or DHT4A as a neutralizing agent were introduced and mixed. Thereafter, the mixture was extruded at an extrusion temperature of 190 °C using a twin-screw extruder (TEK 30 MHS, manufactured by SMPLATECH CO., diameter: 32 mm, L/D=40) to manufacture polyethylene composition A in a pellet form.

### Examples 2 to 6: Preparation of polyethylene compositions B to F

Polyethylene compositions B to F were respectively manufactured in the same manner as in Example 1, except that the slurry polymerization was performed through a bimodal polymerization process while adjusting the input amounts of hydrogen and comonomers differently according to the conditions described in Table 1 below.

### Comparative Examples 1 to 10: Preparation of polyethylene compositions G to P

Polyethylene compositions G to P were respectively manufactured in the same manner as in Example 1, except that the slurry polymerization was performed through a bimodal polymerization process while adjusting the input amounts of ethylene monomer, hydrogen gas, and comonomers (1-butene, 1-hexene) differently according to the conditions described in Table 1 below.

In particular, polyethylene composition O of Comparative Example 9 was manufactured by performing the slurry polymerization process of only the first reactor without using the second reactor. Polyethylene composition P of Comparative Example 10 was manufactured by performing the slurry polymerization process using the second reactor but with the introduction of hydrogen gas into the second reactor.

**[Table 1]**

| | Polyethylene composition | Conditions in the First Reactor | | | | | Conditions in the Second Reactor | | | | |
|---|---|---|---|---|---|---|---|---|---|---|---|
| | | Ethylene [ml/min] | 1-Butene Ethylene [ml/min] | 1-Hexene [ml/min] | Hydrogen [g/hr] | Pressure [bar] | Ethylene [ml/min] | 1-Butene Ethylene [ml/min] | 1-Hexene [ml/min] | Hydrogen [g/hr] | Pressure [bar] |
| Example 1 | A | 500 | 10 | None | 10 | 7 | 400 | 2 | None | None | 3.5 |
| Example 2 | B | 500 | 12 | None | 10 | 7.1 | 400 | 2 | None | None | 3.5 |
| Example 3 | C | 500 | 10 | 5 | 8 | 7.1 | 400 | 1 | 1 | None | 3.5 |
| Example 4 | D | 500 | None | 10 | 6 | 6.8 | 400 | None | 2 | None | 3.5 |
| Example 5 | E | 500 | None | 8 | 2 | 6.5 | 400 | None | 4 | None | 3.6 |
| Example 6 | F | 500 | None | 8 | 1 | 6.4 | 400 | None | 2 | None | 3.5 |
| Comparative Example 1 | G | 500 | 4 | None | 10 | 6.8 | 400 | 2 | None | None | 3.5 |
| ComparativeExample 2 | H | 500 | 5 | None | 4 | 6.4 | 400 | 2 | None | None | 3.5 |
| ComparativeExample 3 | I | 500 | 6 | None | 6 | 6.7 | 400 | 2 | None | None | 3.5 |
| ComparativeExample 4 | J | 500 | 10 | 10 | 8 | 6.7 | 400 | 2 | 2 | None | 3.6 |
| ComparativeExample 5 | K | 500 | 6 | 8 | 4 | 6.5 | 400 | 1 | 1 | None | 3.5 |
| ComparativeExample 6 | L | 500 | None | 5 | 4 | 6.4 | 400 | None | 2 | None | 3.5 |
| ComparativeExample 7 | M | 500 | 15 | None | 6 | 6.9 | 400 | 5 | None | None | 3.6 |
| ComparativeExample 8 | N | 500 | 10 | 5 | 4 | 6.8 | 400 | 3 | 2 | None | 3.6 |
| ComparativeExample 9 | O | 700 | 13 | None | 12 | 7.5 | None | None | None | None | None |
| ComparativeExample 10 | P | 500 | 15 | None | 10 | 7.1 | 400 | 1 | None | 2 | 3.7 |

### <Test Example 1: Evaluation of primary physical properties of polyethylene compositions>

The primary physical properties of the polyethylene compositions manufactured in Examples and Comparative Examples were evaluated according to the methods described below, and the results are shown in Table 2.

### (1) Melt index

The melt index (MI_{2.16}) was measured at 190 °C under a load of 2.16 kg in accordance with ASTM D 1238 (Condition E, 190 °C, 2.16 kg) using a Gottfert MI-4 instrument. The results are expressed as the weight (g) of the polyethylene composition melted for 10 minutes.

### (2) Density

The density (g/cm³) was measured at 23 °C in accordance with the ISO 1183-2 standard.

### (3) Number average molecular weight (Mn), Weight average molecular weight (Mw), and Molecular weight distribution (Mw/Mn)

For the polyethylene compositions prepared in Examples and Comparative Examples, the weight average molecular weight (Mw, g/mol) and the number average molecular weight (Mn, g/mol) were measured using gel permeation chromatography (GPC, manufactured by Waters) in accordance with ASTM D 6474. The molecular weight distribution (Mw/Mn, PDI, polydispersity index) was calculated by dividing the weight average molecular weight by the number average molecular weight.

Specifically, a Waters PL-GPC220 instrument was used as the GPC equipment, and a Polymer Laboratories PLgel MIX-B column with a length of 300 mm was utilized. The measurement temperature was 160 °C, 1,2,4-trichlorobenzene was used as a solvent, and the flow rate was 1 mL/min. Each sample of the polyethylene compositions prepared in Examples and Comparative Examples was pre-treated by dissolving it in 1,2,4-trichlorobenzene containing 0.0125% of BHT at 160 °C for 3 hours using a GPC analytical instrument (PL-GPC220). Then, the sample was prepared at a concentration of 32 mg/10 mL and supplied in an amount of 200 µL. Mw and Mn values were derived using a calibration curve formed using polystyrene standard specimens. Nine types of polystyrene standard specimens having weight average molecular weights of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol were used.

### (4) SCB content

In accordance with an FT-IR analysis method, the SCB content of the polyethylene compositions of Examples and Comparative Examples was measured as the number of short branched chains having 2 to 7 carbon atoms per 1,000 carbon atoms (/1,000C). The specific measurement conditions are as follows.

### <FT-IR Instrument and Measurement Conditions>

* Instrument: PerkinElmer Spectrum 100
* Measurement temperature: 160 °C
* Wavenumber: 2,700 cm⁻¹ to 3,000 cm⁻¹
* Number of scanning: 8 times
* Resolution: 8 cm⁻¹
* Detector: DTGS

### (5) High crystal content and Low crystal content

For the polyethylene compositions of Examples and Comparative Examples, the content of the crystal fraction eluting at 90 °C or more, i.e., high crystal content, and the content of the crystal fraction eluting at 50 °C or more and less than 80 °C, i.e., low crystal content, were respectively measured by Crystallization Elution Fractionation (CEF) analysis.

Specifically, the crystal fraction content at each temperature was measured by CEF analysis using an Agilent Technologies 7890A instrument from PolymerChar. First, after dissolving a sample in 20 mL of 1,2,4-trichlorobenzene at a concentration of 1.5 mg/mL, the sample was dissolved by raising the temperature from 30 °C to 150 °C at a rate of 40 °C/min. Thereafter, the sample was recrystallized by lowering the temperature to 35 °C at a rate of 0.5 °C/min, and a CEF graph was obtained through a process of eluting by raising the temperature again to 140 °C at a rate of 1 °C/min.

The CEF graph obtained in this manner represents the relative ratio of crystal fraction peak areas eluted according to the temperature (°C), and is a CEF curve graph where the x-axis is elution temperature (temperature, °C) and the y-axis is dW/dt. In this CEF curve graph, the ratio of the peak area in the region where the temperature is 90 °C or more was expressed as high crystal content (CEF_{≥90°C}), taking the total peak area as 100%. The ratio of the peak area of the crystal fraction eluted at 50 °C or more and less than 80 °C was expressed as low crystal content (CEF_{<80°Cand≥50°C}).

**[Table 2]**

| | Polyethylene composition | Ml [2.16kg load, g/10min ] | Density [g/cm³] | Mw [g/mol] | Mn [g/mol] | PDI (Mw/Mn) | SCB [/1000C] | High crystal content [90 °C or more, %] | Low crystal content [50°C or more to less than 80°C, %] |
|---|---|---|---|---|---|---|---|---|---|
| Example 1 | A | 1.59 | 0.9488 | 106700 | 9500 | 11.23 | 7 | 62 | 15.9 |
| Example 2 | B | 1.59 | 0.9471 | 106200 | 10500 | 10.11 | 8.2 | 57.2 | 18.4 |
| Exampl e 3 | C | 1.32 | 0.9467 | 122000 | 11995 | 10.17 | 10 | 53.8 | 23.2 |
| Exampl e 4 | D | 1.17 | 0.9495 | 108700 | 10400 | 10.45 | 6.9 | 61.8 | 16.3 |
| Exampl e 5 | E | 0.8 | 0.962 | 140500 | 15110 | 9.30 | 6.1 | 81.6 | 9.4 |
| Exampl e 6 | F | 1.24 | 0.95 | 120200 | 6700 | 17.94 | 4.6 | 56.3 | 16.6 |
| Comparative Example 1 | G | 1.45 | 0.9527 | 107000 | 9700 | 11.03 | 3.2 | 71.2 | 4.5 |
| Comparative Example 2 | H | 1.09 | 0.9539 | 128000 | 12200 | 10.49 | 4.2 | 72.2 | 5.1 |
| Comparative Example 3 | I | 0.64 | 0.941 | 122000 | 28980 | 4.21 | 5.7 | 73.4 | 6.2 |
| Comparative Example 4 | J | 1.57 | 0.94 | 115000 | 9000 | 12.78 | 21 | 57.3 | 31 |
| Comparative Example 5 | K | 1.13 | 0.931 | 106000 | 31000 | 3.42 | 14.1 | 48.2 | 28.1 |
| Comparative Example 6 | L | 0.9 | 0.952 | 137000 | 9700 | 14.12 | 2.4 | 74.6 | 3.7 |
| Comparative Example 7 | M | 1 | 0.920 | 102600 | 39000 | 2.63 | 11.5 | 8.5 | 58.1 |
| Comparative Example 8 | N | 0.9 | 0.925 | 119600 | 26995 | 4.43 | 11.4 | 30.4 | 20.2 |
| Comparative 9 | O | 1.9 | 0.952 | 101300 | 20630 | 4.91 | 7.2 | 83.2 | 4.2 |
| Comparative 10 | P | 2.0 | 0.940 | 99900 | 11350 | 8.80 | 11.0 | 47.6 | 31.0 |

### <Test Example 2: Evaluation of secondary physical properties of polyethylene compositions>

As an evaluation of the secondary physical properties of the polyethylene compositions manufactured in Examples and Comparative Examples, solid rheological properties were evaluated according to the methods described below, and the results are shown in Table 3.

### - Preparation of samples for evaluation of solid rheological properties

The polyethylene compositions prepared in Examples and Comparative Examples were pressed at 190 °C using a hot press to manufacture sheets having a thickness of 0.5 mm.

### - Evaluation of solid rheological properties

Dynamic viscoelasticity curves were obtained by measuring the modulus according to temperature changes using a Q800 DMA (Dynamic Mechanical Analysis, manufactured by TA Instruments) while performing oscillation under conditions of a heating rate of 5 °C/min from -90 °C to 140 °C, a strain of 0.1%, and a frequency of 1 Hz. Thereafter, the loss modulus G"ₐ of alpha relaxation (loss modulus @ alpha relaxation) appearing in a range of 30 °C or more to 100 °C or less, and the loss modulus G"_{b} of beta relaxation (loss modulus @ beta relaxation) appearing in a range of -50 °C or more to 20 °C or less were calculated and are shown in Table 3 below.

Specifically, a sheet having a thickness of 0.5 mm prepared at 190 °C using a pressure press was cut into specimens having a width of 6 mm. Thereafter, the specimens were loaded into a DMA film tension geometry, and the modulus was measured by elevating the temperature from -90 °C to 140 °C under conditions of a frequency of 1 Hz, a heating rate of 5 °C/min, and a strain of 0.1% (which is a strain within a linear viscoelastic region) while oscillating in a vertical direction. Thereafter, G' (or E') and G" (or E") were automatically determined by the DMA instrument, and the calculation method thereof is as shown in FIG. 1.

**[Table 3]**

| | Polyethylene composition | G"_{b} @ beta relaxation temp [MPa] | G"ₐ @ alpha relaxation temp [MPa] | G"ₐ/ G"_{b} |
|---|---|---|---|---|
| Example 1 | A | 131 | 164 | 1.25 |
| Example 2 | B | 114 | 143 | 1.25 |
| Example 3 | C | 123 | 141 | 1.15 |
| Example 4 | D | 122 | 156 | 1.28 |
| Example 5 | E | 125 | 180 | 1.44 |
| Example 6 | F | 110 | 169 | 1.54 |
| Comparative Example 1 | G | 108 | 191 | 1.77 |
| Comparative Example 2 | H | 115 | 195 | 1.70 |
| Comparative Example 3 | I | 82 | 131 | 1.60 |
| Comparative Example 4 | J | 126 | 103 | 0.82 |
| Comparative Example 5 | K | 112 | 79 | 0.71 |
| Comparative Example 6 | L | 110 | 193 | 1.75 |
| Comparative Example 7 | M | 93 | 53 | 0.57 |
| Comparative Example 8 | N | 100 | 72 | 0.72 |
| Comparative Example 9 | O | Not measurable (Breakage) | Not measurable (Breakage) | Not measurable (Breakage) |
| Comparative Example 10 | P | 130 | 92 | 0.71 |

### <Test Example 3: Preparation and Evaluation of physical properties of biaxially stretched film>

Biaxially stretched films were manufactured using the polyethylene compositions prepared in Examples and Comparative Examples according to the following method, and the physical properties of each film were measured and are shown in Table 4.

### Preparation of biaxially stretched film

- A polyethylene composition sheet having a thickness of 0.8 mm was manufactured using a lab extruder line from Bruckner (L/D ratio: 42, screw diameter: 25 mm, melt/T-die temperature: 220 °C).
- Biaxial stretching was performed on the polyethylene composition sheet having a size of 90 mm in width and 90 mm in length (90 mm * 90 mm) using KARO 5.0 equipment.
- Sequential stretching (MD → TD) was performed after preheating for 80 seconds under the following conditions: (Examples 1 to 6 and Comparative Examples 1 to 10: preheating and stretching at 124 °C, with a stretched film thickness of about 20 µm to 30 µm).

### Evaluation of physical properties of biaxially stretched film

- Haze (%): Measured in accordance with the ASTM 1003 standard.
- Tensile Modulus (MPa): Measured in each of the MD and TD directions in accordance with the ASTM D 882 standard.
- Thickness uniformity: In a stretched film having a width of 210 mm and a length of 297 mm (210 mm * 297 mm), the standard deviation of 20 thickness measurements taken at 20 non-overlapping points of the film was calculated and is shown as the thickness uniformity value in Table 4 below. At this time, the thickness of the film was measured with a Mitutoyo 547-401A thickness gauge (stretched film thickness: about 25 µm).

Specifically, the thickness uniformity of the stretched film was determined by calculating the sample mean and sample standard deviation of the thickness, and then converting the result into a percentage (%) by calculating (sample standard deviation of thickness [µm, micrometers] / sample mean of thickness [µm, micrometers]) × 100. The sample mean and sample standard deviation were calculated as follows. $Sample Mean \overline{X} = \frac{1}{N} {\sum }_{i - 1}^{N} {X}_{i}$ $Sample Standard Deviation S = \sqrt{\frac{1}{N - 1} {\sum }_{i = 1}^{N} {\left({X}_{i}-\overline{X}\right)}^{2}} .$

**[Table 4]**

| | Maximum Draw Ratio (MDXTD) | Haze [%] | Tensile Modulus (Mpa) | | Thickness uniformity [%] |
|---|---|---|---|---|---|
| | | | MD | TD | |
| Example 1 | 5X8 | 4.1 | 1250 | 1610 | 1.99 |
| Example 2 | 5X8 | 3.7 | 1180 | 1620 | 3.54 |
| Example 3 | 5X8 | 3.5 | 1130 | 1590 | 0.50 |
| Example 4 | 5X8 | 3.9 | 1270 | 1600 | 1.00 |
| Example 5 | 5X8 | 4.9 | 1600 | 2100 | 2.94 |
| Example 6 | 5X8 | 8.4 | 1237 | 1638 | 4.76 |
| Comparative Example 1 | 4X6 | 7.1 | 1550 | 1910 | 7.33 |
| Comparative Example 2 | 4X6 | 6.4 | 1650 | 1980 | 8.88 |
| Comparative Example 3 | 5X8 | 7.9 | 1017 | 1174 | 10.76 |
| Comparative Example 4 | 5X8 | 5.2 | 657 | 689 | 8.96 |
| Comparative Example 5 | 5X8 | 1.6 | 645 | 944 | 8.17 |
| Comparative Example 6 | 4X6 | 5.4 | 1617 | 1995 | 13.77 |
| Comparative Example 7 | 5X8 | 2.4 | 520 | 689 | 6.03 |
| Comparative Example 8 | 5X8 | 2.7 | 542 | 710 | 5.45 |
| Comparative Example 9 | Not measurable (Breakage) | Not measurable (Breakage) | Not measurable (Breakage) | Not measurable (Breakage) | Not measurable (Breakage) |
| Comparative Example 10 | 5X8 | 4.5 | 745 | 851 | 6.97 |

The results in Table 4 shows that the polyethylene compositions of Examples 1 to 6, which have high melt indices, high densities, and high crystal contents and in which two types of loss moduli are formed in a balanced manner by optimizing the SCB content, can effectively manufacture stretched films exhibiting higher shrinkage resistance, uniform thickness deviation, and superior printability and transparency compared to the Comparative Examples. This is achieved through excellent stretching stability and film processability without breakage even when a maximum draw ratio of 5 X 8 (MD X TD) is applied.

In contrast, it can be confirmed that in the polyethylene compositions of Comparative Examples 1 to 10, the melt index, density, high crystal content, and SCB content are not optimized. Specifically, due to a decrease in high crystal content and an increase in low crystal content, low density, or low SCB content, stretching up to 5X8 cannot be achieved during film stretching, and breakage occurs, forcing the application of a draw ratio of only 4X6. Alternatively, it is observed that the thickness deviation increases after stretching or the tensile modulus of the film decreases.

Accordingly, the polyethylene composition of the present disclosure can effectively manufacture stretched films having outstanding stretching stability and mechanical properties. At the same time, when manufactured into a stretched film, it exhibits low viscosity in the processing region, showing excellent processability and productivity. Thus, it is highly advantageous for the commercialization of products such as mono-material packaging films having high shrinkage resistance, printability, and transparency.

## Claims

1. A polyethylene composition comprising at least one ethylene-alpha olefin copolymer, wherein the polyethylene composition has:
a melt index (MI_{2.16}, at 190 °C under a load of 2.16 kg) of 0.7 g/10 min or more to 2.0 g/10 min or less;
a density of 0.940 g/cm³ or more to 0.965 g/cm³ or less;
a short chain branch (SCB) content of 4.5 or more to 13 or less per 1000 carbon atoms (4.5 to 13 / 1000C); and
wherein, in a crystallization elution fractionation (CEF) analysis of the polyethylene composition for measuring the relative ratio of crystal fraction peak areas eluting with temperature (°C),
a ratio of the crystal fraction peak area eluted at 90 °C or more relative to the total peak area (CEF_{≥90°C}) is 40% or more to 85% or less, and
a ratio of the crystal fraction peak area eluted at 50 °C or more and less than 80 °C relative to the total peak area (CEF_{<80°Cand≥50°C}) is 8% or more to 30% or less.

2. The polyethylene composition according to Claim 1, wherein, in a crystallization elution fractionation (CEF) analysis of the polyethylene composition, a ratio (CEF_{≥90°C} / CEF_{<80°Cand≥50°C}) of the ratio of the crystal fraction peak area eluted at 90 °C or more (CEF_{≥90°C}) to the ratio of the crystal fraction peak area eluted at 50 °C or more and less than 80 °C (CEF_{<80°Cand≥50°C}) is 2 times or more to 11 times or less.

3. The polyethylene composition according to Claim 1, wherein the polyethylene composition has:
a number average molecular weight (Mn) of 5,000 g/mol or more to 20,000 g/mol or less,
a weight average molecular weight (Mw) of 80,000 g/mol or more to 160,000 g/mol or less, and
a molecular weight distribution (Mw/Mn) of 8 or more to 20 or less.

4. The polyethylene composition according to Claim 1, wherein, in a dynamic viscoelastic curve measured by Dynamic Mechanical Analysis (DMA) of the polyethylene composition, a loss modulus (G"ₐ) of an alpha relaxation (α-relaxation) appearing in a range of 30 °C or more to 100 °C or less is 95 MPa or more to 180 MPa or less.

5. The polyethylene composition according to Claim 1, wherein, in a dynamic viscoelastic curve measured by Dynamic Mechanical Analysis (DMA) of the polyethylene composition, a loss modulus (G"_{b}) of a beta relaxation (β-relaxation) appearing in a range of -50 °C or more to 20 °C or less is 95 MPa or more to 180 MPa or less.

6. The polyethylene composition according to Claim 1, wherein a ratio (G"ₐ / G"_{b}) of a loss modulus (G"ₐ) of an alpha relaxation appearing in a range of 30 °C or more to 100 °C or less to a loss modulus (G"_{b}) of a beta relaxation appearing in a range of -50 °C or more to 20 °C or less, as measured by Dynamic Mechanical Analysis (DMA) of the polyethylene composition, is 0.95 or more to 1.65 or less.

7. The polyethylene composition according to Claim 1, wherein the ethylene-alpha olefin copolymer is at least one selected from the group consisting of an ethylene/1-hexene copolymer and an ethylene/1-butene copolymer.

8. A stretched film comprising the polyethylene composition of Claim 1.

9. The stretched film according to Claim 8, wherein a draw ratio in a machine direction (MD) or a transverse direction (TD) is 5 or more; or alternatively, wherein a draw ratio in the MD is 5 or more and a draw ratio in the TD is 8 or more.

10. The stretched film according to Claim 8, wherein an MD tensile modulus and a TD tensile modulus, each measured in accordance with ASTM D 882, are 1,000 MPa or more, respectively.

11. The stretched film according to Claim 8, wherein a haze measured in accordance with ASTM 1003 is 9% or less.

12. The stretched film according to Claim 8, wherein a thickness uniformity of the stretched film is 7% or less, the thickness uniformity being calculated as a standard deviation value of 20 or more thickness measurements taken at 20 or more non-overlapping points of the stretched film.
